# EUROPEAN PATENT APPLICATION

(11) **EP 4 797 553 A1**
(43) Date of publication of application: **26.08.2026**
(21) Application number: 24896215.1
(22) Date of filing: 06.11.2024
(51) Int. Cl.: H04B 7/0417

(54) **COMMUNICATION METHOD AND RELATED DEVICE**

(30) Priority: 27.11.2023 CN 202311603000
(71) Applicant: HUAWEI TECHNOLOGIES CO., LTD., Shenzhen 518129 (CN)
(72) Inventor: LI, Fang, Shenzhen, Guangdong 518129 (CN); LIU, Fengwei, Shenzhen, Guangdong 518129 (CN); XIANG, Gao, Shenzhen, Guangdong 518129 (CN)
(74) Representative: Gill Jennings & Every LLP
(86) International application number: PCT/CN2024/130166
(87) International publication number: WO 2025/113124

(57) **Abstract**

A communication method and a related device are provided, to obtain a measurement result of a channel between a network device and a terminal device based on measurement information and also obtain L₁ pieces of relatively independent channel information, so as to obtain measurement information with higher accuracy. In the method, a reference signal received by the terminal device is sent in L₁ time units by using L₁ first weights respectively, an i^{th} first weight in the L₁ first weights is obtained by using an i^{th} second weight in L₁ second weights and a third weight, and the L₁ second weights are orthogonal. In other words, the reference signal transmitted in the L₁ time units is sent by using the L₁ mutually orthogonal second weights.

## Description

This application claims priority to Chinese Patent Application No. 202311603000.6, filed with the China National Intellectual Property Administration on November 27, 2023, and entitled "COMMUNICATION METHOD AND RELATED DEVICE", which is incorporated herein by reference in its entirety.

### TECHNICAL FIELD

This application relates to the field of wireless communication technologies, and in particular, to a communication method and a related device.

### BACKGROUND

As a key technology in wireless communication, a multiple-input multiple-output (multiple-input multiple-output, MIMO) technology may be used to satisfy a requirement for high-rate transmission. However, in a communication process implemented based on the MIMO technology, how to implement channel measurement is an urgent technical problem to be resolved.

### SUMMARY

This application provides a communication method and a related device, to obtain a measurement result of a channel between a network device and a terminal device based on measurement information and also obtain L₁ pieces of relatively independent channel information, so as to obtain measurement information with higher accuracy.

A first aspect of this application provides a communication method. The method is performed by a terminal device, the method is performed by a part of components (for example, a processor, a chip, or a chip system) in the terminal device, or the method may be implemented by a logical module or software that can implement all or some functions of the terminal device. In the first aspect and possible implementations of the first aspect, an example in which the communication method is performed by the terminal device is used for description. In the method, the terminal device receives a reference signal, where the reference signal is sent in L₁ time units by using L₁ first weights respectively, L₁ is an integer greater than 1, an i^{th} first weight in the L₁ first weights is obtained by using an i^{th} second weight in L₁ second weights and a third weight, the L₁ second weights are orthogonal, and a value of i ranges from 1 to L₁. The terminal device sends measurement information, where the measurement information is obtained by performing measurement based on the reference signal.

Based on the foregoing technical solution, after a network device sends a reference signal, because the reference signal is transmitted through a wireless channel, the reference signal received by the terminal device can carry channel information of the wireless channel. Then, measurement information obtained by the terminal device by measuring the reference signal can reflect the channel information. A manner in which the terminal device subsequently sends the measurement information enables the network device to obtain a measurement result of a channel between the network device and the terminal device based on the measurement information.

In addition, the reference signal received by the terminal device is sent in L₁ time units by using L₁ first weights respectively, an i^{th} first weight in the L₁ first weights is obtained by using an i^{th} second weight in L₁ second weights and a third weight, and the L₁ second weights are orthogonal. In other words, the reference signal transmitted in the L₁ time units is sent by using the L₁ mutually orthogonal second weights. In this manner, the terminal device measures, relatively independently, a reference signal carried in different time units, and further obtains L₁ pieces of relatively independent channel information, to obtain measurement information with higher accuracy.

A second aspect of this application provides a communication method. The method is performed by a network device, the method is performed by a part of components (for example, a processor, a chip, or a chip system) in the network device, or the method may be implemented by a logical module or software that can implement all or some functions of the network device. In the second aspect and possible implementations of the second aspect, an example in which the communication method is performed by the network device is used for description. In the method, the network device sends a reference signal, where the reference signal is sent in L₁ time units by using L₁ first weights respectively, L₁ is an integer greater than 1, an i^{th} first weight in the L₁ first weights is obtained by using an i^{th} second weight in L₁ second weights and a third weight, the L₁ first weights are orthogonal, and a value of i ranges from 1 to L₁. The network device receives measurement information, where the measurement information is obtained based on the reference signal.

Based on the foregoing technical solution, after the network device sends a reference signal, because the reference signal is transmitted through a wireless channel, the reference signal received by a terminal device can carry channel information of the wireless channel. Then, measurement information obtained by the terminal device by measuring the reference signal can reflect the channel information. A manner in which the terminal device subsequently sends the measurement information enables the network device to obtain a measurement result of a channel between the network device and the terminal device based on the measurement information.

In addition, the reference signal received by the terminal device is sent in time units by using first weights respectively, an i^{th} first weight in the first weights is obtained by using an i^{th} second weight in second weights and a third weight, and the second weights are orthogonal. In other words, the reference signal transmitted in the time units is sent by using the mutually orthogonal second weights. In this manner, the terminal device measures, relatively independently, a reference signal carried in different time units, and further obtains L₁ pieces of relatively independent channel information, to obtain measurement information with higher accuracy.

In this application, in the L₁ time units (or L₂ time units mentioned below), each time unit may be one or more symbols, one or more mini-slots, one or more slots, one or more subframes, or the like.

Optionally, the reference signal in this application may include a synchronization signal/physical broadcast channel block (synchronization signal/physical broadcast channel block, SSB, or SS/PBCH block), a channel state information reference signal (channel state information reference signal, CSI-RS), and the like.

Optionally, the L₁ time units are consecutive in time domain. Because channel information of different time units consecutive in time domain is strongly associated, in this manner, the terminal device can reflect same or similar channel information as much as possible based on different measurement results corresponding to the reference signal in the L₁ time units, to obtain measurement information with higher accuracy.

Optionally, at least two of the L₁ time units are non-consecutive in time domain.

It should be understood that, that the reference signal is sent in the L₁ time units by using the L₁ first weights respectively may be understood as that the L₁ time units are in one-to-one correspondence with the L₁ first weights. For example, a weight of the reference signal in an i^{th} time unit in the L₁ time units is the i^{th} first weight in the L₁ first weights.

Optionally, a reference signal in each time unit may be considered as one reference signal, that is, "the reference signal carried in the L₁ time units" may be considered as L₁ reference signals. Correspondingly, the foregoing method may be performed one or more times, that is, receiving and sending processes of one or more L₁ reference signals are implemented by using one or more L₁ time units respectively.

Alternatively, a reference signal in every L₁ time unit may be considered as one reference signal, that is, "the reference signal carried in the L₁ time units" may be considered as 1 reference signal. Correspondingly, the foregoing method may be performed one or more times, that is, receiving and sending processes of one or more reference signals are implemented by using one or more L₁ time units respectively.

It should be understood that, that the L₁ second weights are orthogonal may be understood as that any two of the L₁ second weights are orthogonal to each other, or different second weights in the L₁ second weights are orthogonal to each other.

It should be understood that the L₁ second weights are orthogonal, and the i^{th} first weight in the L₁ first weights is obtained by using the i^{th} second weight in the L₁ second weights and the third weight. In other words, the L₁ first weights are obtained based on the L₁ second weights. Different weights in the L₁ first weights may be orthogonal, or may be non-orthogonal. This is not limited herein.

It should be noted that, that the i^{th} first weight in the L₁ first weights is obtained by using the i^{th} second weight in the L₁ second weights and the third weight includes: the i^{th} first weight in the L₁ first weights is obtained by multiplying N₁ elements in the i^{th} second weight in the L₁ second weights by the N₁ sub-vectors in the third weight respectively.

In a possible implementation of the first aspect or the second aspect, the reference signal is sent through M digital ports, and M is a positive integer; and weights corresponding to a first digital port in the M digital ports in the L₁ time units are the L₁ first weights, the first digital port includes N₁ virtual ports, the second weight includes N₁ elements corresponding to the N₁ virtual ports, and N₁ is an integer greater than or equal to 1.

Optionally, when M is greater than 1, weights of the M digital ports for sending the reference signal may be the same (for example, the L₁ first weights), or weights of the M digital ports for sending the reference signal may be different (for example, weights corresponding to the first digital port are the L₁ first weights, and weights corresponding to another digital port are different from the L₁ first weights), or weights of the M digital ports for sending the reference signal may be partially the same (for example, weights corresponding to the first digital port are the L₁ first weights, weights corresponding to a part of other digital ports are different from the L₁ first weights, and weights corresponding to the other part of the other digital ports are the same as the L₁ first weights).

It should be understood that the second weight includes N₁ elements corresponding to the N₁ virtual ports, and in the L₁ second weights, a quantity of elements included in each second weight is N₁. In other words, in the L₁ second weights, each second weight includes N₁ elements corresponding to the N₁ virtual ports. It can be learned from the foregoing descriptions that different second weights may be orthogonal. Therefore, in the L₁ second weights, N₁ elements included in different second weights are not completely the same.

In this application, the virtual port may be replaced with another term, for example, an analog port, a virtual subarray, an analog subarray, or a subarray.

Based on the foregoing technical solution, the reference signal is sent in the L₁ time units by using the L₁ first weights respectively, and the L₁ first weights may be weights of the first digital port in the M digital ports. The first digital port includes the N₁ virtual ports, and the second weight includes the N₁ elements corresponding to the N₁ virtual ports, that is, the L₁ second weights corresponding to the virtual ports included in the first digital port in the L₁ time units are orthogonal. In this manner, weights of virtual ports included in a same digital port in different time units are orthogonal.

Optionally, L₁ is an integer multiple of N₁. For example, N₁ and L₁ are equal.

Optionally, the N₁ virtual ports occupy a same frequency domain resource in different time units in the L₁ time units. In this manner, implementation complexity of receiving and sending the reference signal in different time units can be reduced as much as possible.

Optionally, the terminal device may further receive indication information indicating that a quantity of virtual ports included in the first digital port is N₁, and/or the terminal device may further receive indication information indicating that a quantity of time units of the reference signal is L₁. The two pieces of indication information may be carried in configuration information of the reference signal, or may be carried in other information/messages/signaling. This is not limited herein.

Optionally, N₁ and L₁ are preconfigured information. This is not limited herein.

It should be understood that, that one digital port includes one or more virtual ports (for example, the first digital port includes the N₁ virtual ports, and a second digital port described below includes N₂ virtual ports) may be understood as that signals of the digital port are received and sent through the one or more virtual ports. For example, in a signal sending process, the digital port is used to send a signal through the one or more virtual ports. For another example, in a signal receiving process, a signal received through the one or more virtual ports may be understood as a signal received through the digital port.

In a possible implementation of the first aspect or the second aspect, the N₁ virtual ports correspond to N₁ antenna element sets respectively, each antenna element set includes one or more antenna elements, and the N₁ elements are used to adjust phases of the N₁ antenna element sets respectively.

Optionally, the N₁ virtual ports are virtual ports (that is, virtual ports of the network device) for sending the reference signal. Correspondingly, the N₁ antenna element sets corresponding to the N₁ virtual ports are antenna element sets (that is, antenna element sets of the network device) for sending the reference signal.

Optionally, that the N₁ virtual ports correspond to the N₁ antenna element sets respectively may be understood as that the N₁ virtual ports are in one-to-one correspondence with the N₁ antenna element sets, or an i^{th} virtual port in the N₁ virtual ports corresponds to an i^{th} antenna element set in the N₁ antenna element sets. Similarly, that the N₁ elements are used to adjust the phases of the N₁ antenna element sets respectively may be understood as that the N₁ elements are in one-to-one correspondence with the N₁ antenna element sets, or an i^{th} element in the N₁ elements is used to adjust a phase of an i^{th} antenna element set in the N₁ antenna element sets, where a value of i ranges from 1 to N₁.

Based on the foregoing technical solution, the N₁ virtual ports included in the first digital port correspond to the N₁ antenna element sets respectively, and the N₁ elements included in the second weight are used to adjust the phases of the N₁ antenna element sets respectively. In addition, each antenna element set includes one or more antenna elements. In other words, the N₁ elements included in the second weight are used to adjust phases of antenna elements corresponding to different virtual ports in the digital port, that is, the L₁ orthogonal second weights are used to implement orthogonality of the phases of the antenna elements corresponding to the different virtual ports.

In a possible implementation of the first aspect or the second aspect, the third weight includes N₁ sub-vectors, a dimension of a P^{th} sub-vector in the N₁ sub-vectors is the same as a quantity of antenna elements in a P^{th} antenna element set in the N₁ antenna element sets, and a value of P ranges from 1 to N₁.

Based on the foregoing technical solution, the dimension of the P^{th} sub-vector in the N₁ sub-vectors included in the third weight is the same as the quantity of antenna elements in the P^{th} antenna element set in the N₁ antenna element sets. In this manner, the third weight can correspond to a weight of each of the N₁ antenna element sets.

Optionally, the N₁ elements included in the second weight are used to adjust the phases of the N₁ antenna element sets respectively. Correspondingly, the third weight includes the N₁ sub-vectors that are also used to adjust the phases of the N₁ antenna element sets, and the first weight is also used to adjust the phases of the N₁ antenna element sets. In other words, the phases of the N₁ antenna element sets may be determined based on the first weight determined based on the N₁ elements included in the second weight and the N₁ sub-vectors included in the third weight.

Optionally, the third weight may be determined by using another reference signal. For example, after the network device may send the another reference signal through different beams (or by using different weights), the terminal device may feed back a plurality of pieces of signal quality information based on the different beams. Correspondingly, the network device may determine the third weight based on signal quality information indicating optimal signal quality in the plurality of pieces of signal quality information, or the network device may determine the third weight based on signal quality information greater than a threshold in the plurality of pieces of signal quality information, or the network device may determine the third weight based on quality (for example, an RSRP) of one or more reference signals fed back by the terminal.

In a possible implementation of the first aspect or the second aspect, a dimension of the first weight is the same as a dimension of the third weight.

Based on the foregoing technical solution, the dimension of the first weight is the same as the dimension of the third weight, that is, the weight of each of the N₁ antenna element sets can be determined based on the first weight used to send the reference signal.

In a possible implementation of the first aspect, a value of M is 1.

Based on the foregoing technical solution, when the value of M is 1, the reference signal may be sent through a digital port (that is, the first digital port). Therefore, the solution is applicable to a scenario in which the network device is configured with a single digital port, to implement transmission and measurement of the reference signal of virtual ports included in the single digital port.

In a possible implementation of the first aspect or the second aspect, a value of M is greater than 1, and a resource of the reference signal satisfies one of the following:
in the resource of the reference signal, time domain resources and frequency domain resources used by different digital ports in the M digital ports to send the reference signal are the same, and the different digital ports in the M digital ports are code division multiplexed;
in the resource of the reference signal, time domain resources used by different digital ports in the M digital ports to send the reference signal are the same, and frequency domain resources used by the different digital ports in the M digital ports to send the reference signal are different (optionally, the different digital ports in the M digital ports are not code division multiplexed); and
in the resource of the reference signal, the M digital ports belong to Q groups of digital ports, each group of digital ports includes one or more digital ports, Q is a positive integer, frequency domain resources used by different groups of digital ports in the Q groups of digital ports to send the reference signal are different, frequency domain resources used by one or more digital ports included in a same group of digital ports in the Q groups of digital ports to send the reference signal are the same, and the one or more digital ports included in the same group of digital ports are code division multiplexed (code division multiplexing, CDM). Optionally, a code division multiplexing type of the one or more digital ports included in the same group of digital ports is frequency domain code division multiplexing.

It should be understood that the resource of the reference signal is a resource used to carry the reference signal, that is, the resource of the reference signal may be a resource used by the network device to send the reference signal, or the resource of the reference signal may be a resource used by the terminal device to receive the reference signal.

Based on the foregoing technical solution, when the value of M is greater than 1, the reference signal may be sent through two or more digital ports (that is, the first digital port and another digital port). Therefore, the solution is applicable to a scenario in which the network device is configured with two or more digital ports, to implement transmission and measurement of the reference signal of virtual ports included in the two or more digital ports. In addition, the resource of the reference signal satisfies one of the foregoing, to improve flexibility of implementing the solution.

In a possible implementation of the first aspect or the second aspect, the method further includes: The terminal device receives indication information indicating that the resource of the reference signal satisfies one of the foregoing.

Optionally, the indication information is carried in configuration information of the reference signal, other messages/information/signaling, or the like. This is not limited herein.

Based on the foregoing technical solution, the terminal device may further receive the indication information indicating that the resource of the reference signal satisfies one of the foregoing, so that the terminal device can determine, based on the indication information, resource configuration manners of different digital ports in the M digital ports.

Optionally, the terminal device determines, in a preconfiguration manner, that the resource of the reference signal satisfies one of the foregoing.

In a possible implementation of the first aspect or the second aspect, a second digital port in the M digital ports includes N₂ virtual ports; and the reference signal is sent in L₂ time units by using L₂ fourth weights respectively, L₂ is an integer greater than 1, a j^{th} fourth weight in the L₂ fourth weights is obtained by using a j^{th} fifth weight in L₂ fifth weights and a sixth weight, and the L₂ fifth weights are orthogonal.

Optionally, in the M digital ports, when weights of the first digital port and the second digital port for sending the reference signal are the same, the L₁ first weights may be the same as the L₂ fourth weights; or when weights of the first digital port and the second digital port for sending the reference signal are different, the L₁ first weights are different from the L₂ fourth weights.

Based on the foregoing technical solution, the reference signal received by the terminal device is sent in the L₂ time units by using the L₂ fourth weights respectively, the j^{th} fourth weight in the L₂ fourth weights is obtained by using the j^{th} fifth weight in the L₂ fifth weights and the sixth weight, and the L₂ fifth weights are orthogonal. In other words, the reference signal transmitted in the L₂ time units is sent by using the L₂ mutually orthogonal fifth weights. In this manner, the terminal device measures, relatively independently, a reference signal carried in different time units, and further obtains L₁ pieces of relatively independent channel information, to obtain measurement information with higher accuracy.

Optionally, L₁ and L₂ are equal. The L₁ time units and the L₂ time units may be same time units, that is, a time domain resource used by the first digital port in the M digital ports to send the reference signal may be the same as a time domain resource used by the second digital port to send the reference signal. In this manner, the same time units can be reused as much as possible, to save communication resources and reduce implementation complexity.

Optionally, N₁ and N₂ are equal. To be specific, a quantity of virtual ports included in the first digital port in the M digital ports may be the same as a quantity of virtual ports included in the second digital port. In this manner, implementation complexity can be reduced.

It should be noted that for an implementation process of the second digital port, refer to the foregoing implementation process of the first digital port. For example, for a correspondence between the L₂ time units and the L₂ fourth weights, refer to the correspondence between the L₁ time units and the L₁ first weights, and for a correspondence between the L₂ fourth weights and the L₂ fifth weights, refer to the correspondence between the L₁ first weights and the L₁ second weights.

In a possible implementation of the first aspect or the second aspect, when in the resource of the reference signal, time domain resources and frequency domain resources used by different digital ports in the M digital ports to send the reference signal are the same, and the different digital ports are code division multiplexed, resources used by the different digital ports in the M digital ports to send the reference signal include same M frequency domain units in frequency domain.

Based on the foregoing technical solution, M is greater than 1. When the time domain resources and frequency domain resources used by the different digital ports in the M digital ports to send the reference signal are the same, and the different digital ports are code division multiplexed, the resources used by the different digital ports to send the reference signal include the same M frequency domain units in frequency domain. In this manner, the different digital ports can be used to send the reference signal on the same frequency domain units in a code division multiplexing manner, and the same frequency domain units can be reused as much as possible, to save communication resources and reduce implementation complexity.

Optionally, each of the M frequency domain units may include one or more subcarriers/resource elements (resource element, RE).

In a possible implementation of the first aspect or the second aspect, when in the resource of the reference signal, time domain resources used by different digital ports in the M digital ports to send the reference signal are the same, frequency domain resources used by the different digital ports in the M digital ports to send the reference signal are different, and the different digital ports in the M digital ports are not code division multiplexed (no CDM), resources used by the different digital ports in the M digital ports to send the reference signal include M different frequency domain units in frequency domain.

Based on the foregoing technical solution, M is greater than 1. When the frequency domain resources used by the different digital ports in the M digital ports to send the reference signal are different, and the different digital ports in the M digital ports are not code division multiplexed, the resources used by the different digital ports to send the reference signal include the M different frequency domain units in frequency domain. In this manner, in a case of no code division multiplexing, different digital ports can be used to send the reference signal on different frequency domain resources, so that flexibility of implementing the solution can be improved.

Optionally, the method further includes: The terminal device receives indication information indicating the M different frequency domain units, so that the terminal device determines a resource position of each frequency domain unit based on the indication information. Optionally, the indication information is carried in configuration information of the reference signal, other messages/information/signaling, or the like. This is not limited herein.

In a possible implementation of the first aspect or the second aspect, the measurement information includes first information obtained by performing measurement based on a reference signal sent through the first digital port, the first information is determined based on N₁ pieces of channel information, the N₁ pieces of channel information are determined respectively by using reference signals sent through the N₁ virtual ports, and the first information is used to determine weights of the N₁ virtual ports in the first digital port.

Based on the foregoing technical solution, the measurement information obtained by the terminal device by performing measurement based on the reference signal may include the first information corresponding to the first digital port, and the first information is used to determine the weights of the N₁ virtual ports in the first digital port. The L₁ second weights corresponding to the N₁ virtual ports in the L₁ time units are orthogonal. In this manner, after the terminal device measures the reference signal carried in the L₁ time units to obtain a measurement result, the terminal device can determine a better (or an optimal) weight of a virtual port in the first digital port based on the measurement result, and indicate the weight by using the first information. Subsequently, the network device can communicate with the terminal device based on the weight. Therefore, when a scale of an antenna array is large, in a manner in which the network device sends a reference signal (usually, a reference signal sent based on different weights may be understood as a reference signal sent based on different beams) in different time units based on orthogonal second weights, the terminal device may determine and indicate a better (or an optimal) weight based on a measurement result of the different time units, so that the network device can perform communication based on the weight, to reduce beam sweeping overheads and implement quick beam tracking.

Optionally, after the terminal device measures the reference signal carried in the L₁ time units to obtain a measurement result, the terminal device can determine, based on the measurement result and a mathematical method, a better (or an optimal) weight of a virtual port in the first digital port. For example, the mathematical method may include a power maximization criterion, a capacity maximization criterion, and the like.

In a possible implementation of the first aspect or the second aspect, the weights of the N₁ virtual ports in the first digital port are obtained by using a first weight vector, and the first weight vector includes N₁ elements; and the N₁ virtual ports correspond to the N₁ antenna element sets respectively, each antenna element set includes one or more antenna elements, and the N₁ elements are used to adjust the phases of the N₁ antenna element sets respectively.

In this application, terms such as a weight vector, a weight, a weighted value, and a weighted vector are interchangeable. For example, the first weight vector may be replaced with a "weight", for example, a seventh weight. For another example, a second weight vector described below may also be replaced with a "weight", for example, an eighth weight. For another example, a "weight" in the first weight, the third weight, the fourth weight, and the sixth weight may also be replaced with an analog weight.

Based on the foregoing technical solution, the weights of the N₁ virtual ports in the first digital port of the network device are obtained by using the first weight vector, the weights of the N₁ virtual ports are obtained by using the first weight vector including the N₁ elements, and the N₁ elements are used to adjust the phases of the N₁ antenna element sets respectively. In other words, in a manner of adjusting a phase of an antenna element, the reference signal can be sent on different virtual ports.

In a possible implementation of the first aspect or the second aspect, that the weights of the N₁ virtual ports in the first digital port are obtained by using the first weight vector includes: the weights of the N₁ virtual ports are obtained by using the first weight vector and a second weight vector, and the second weight vector includes N₁ sub-vectors; and a dimension of a T^{th} sub-vector in the N₁ sub-vectors is the same as a quantity of antenna elements in a T^{th} antenna element set in the N₁ antenna element sets, and a value of T ranges from 1 to N₁.

Based on the foregoing technical solution, the dimension of the T^{th} sub-vector in the N₁ sub-vectors included in the first weight vector is the same as the quantity of antenna elements in the T^{th} antenna element set in the N₁ antenna element sets. In this manner, the first weight vector can correspond to a weight of each of the N₁ antenna element sets.

In a possible implementation of the first aspect or the second aspect, the first information satisfies any one of the following:
the first information includes a quantization processing result of the first weight vector;
the first information includes a quantization processing result corresponding to both one element in the N₁ elements corresponding to one virtual port in the N₁ virtual ports and differences of N₁-1 elements in the N₁ elements corresponding to N₁ - 1 virtual ports other than the one virtual port relative to the one element;
the first information includes a first index and a second index, where the first index and the second index are used to determine the first weight vector of the first digital port from one or more weight vectors included in a codebook set, the first index is a codebook index in a first dimension, the second index is a codebook index in a second dimension, and in the one or more weight vectors included in the codebook set, each weight vector is determined by using a weight in the first dimension and a weight in the second dimension; and
the first information includes a third index, where the third index is used to determine the first weight vector of the first digital port from one or more weight vectors included in a codebook set.

Based on the foregoing technical solution, the first information may be implemented in any one of the foregoing manners, to improve flexibility of implementing the solution.

In a possible implementation of the first aspect or the second aspect, the method further includes: The terminal device receives second information, where the second information is used to determine the codebook set.

Optionally, the codebook set is determined by using port information of a virtual port in one or more digital ports, and port information of a virtual port in any digital port includes at least one of the following:
a quantity of virtual ports included in a digital port is N₁;
a quantity of virtual ports in a first dimension of the digital port is M₁;
a quantity of virtual ports in a second dimension of the digital port is M₂;
an oversampling factor in the first dimension of the digital port is O₁; and
an oversampling factor in the second dimension of the digital port is O₂.

Based on the foregoing technical solution, when the first information includes an index (for example, the first index, the second index, and the third index), the terminal device may further receive the second information, determine the codebook set by using the second information, and subsequently determine the weights of the N₁ virtual ports in the first digital port in the codebook set based on the index indicated by the first information.

In a possible implementation of the first aspect or the second aspect, the second information satisfy at least one of the following:
the second information includes port information of a virtual port included in the first digital port;
the second information includes a fourth index, where the fourth index is used to determine, in preconfigured or predefined port information of one or more virtual ports, port information of a virtual port included in the first digital port;
the second information includes a fifth index, where the fifth index is used to determine the codebook set from one or more preconfigured or predefined codebook sets;
the second information indicates a part of items in port information of a virtual port included in the first digital port, and other items in the port information of the virtual port included in the first digital port are determined by using the part of items and port information of one or more preconfigured virtual ports; and
the second information indicates port information of a virtual port included in the first digital port, and the port information of the virtual port is used to determine the codebook set from one or more preconfigured or predefined codebook sets.

Based on the foregoing technical solution, the second information may be implemented in at least one of the foregoing manners, to improve flexibility of implementing the solution.

In a possible implementation of the first aspect or the second aspect, the measurement information includes M pieces of information and/or K pieces of information, the M pieces of information are used to determine a first weight vector of each of the M digital ports, one of the M pieces of information is the first information, the K pieces of information are used to determine a first weight vector of a digital port included in each group of K groups of digital ports, each group of the K groups of digital ports includes one or more of the M digital ports, K is a positive integer less than or equal to M, and one of the K pieces of information is the first information.

Based on the foregoing technical solution, the measurement information sent by the terminal device may include the M pieces of information and/or the K pieces of information. In this manner, the network device can determine the first weight vector of each of the M digital ports by using the M pieces of information and/or the K pieces of information.

Optionally, the measurement information satisfies any one of the following:
when a quantity of ranks (rank) of the reference signal satisfies a first condition, the measurement information includes the M pieces of information;
when a quantity of ranks of the reference signal satisfies a second condition, the measurement information includes the K pieces of information;
when channel quality information (channel quality indicator, CQI) of the reference signal satisfies a third condition, the measurement information includes the M pieces of information; and
when a CQI of the reference signal satisfies a fourth condition, the measurement information includes the K pieces of information.

In a possible implementation of the first aspect or the second aspect, the method further includes: The terminal device receives indication information indicating that the measurement information includes the M pieces of information and/or the K pieces of information. In this manner, the terminal device and the network device can determine information content carried in the measurement information.

Optionally, the indication information is carried in configuration information of the reference signal, other messages/information/signaling, or the like. This is not limited herein.

In a possible implementation of the first aspect or the second aspect, in one or more digital ports included in each group of the K groups of digital ports, port information of virtual ports in different digital ports is the same.

Based on the foregoing technical solution, when the measurement information includes K pieces of information, the K pieces of information are used to determine a first weight vector of a digital port included in each group of the K groups of digital ports, and each group of the K groups of digital ports includes one or more of the M digital ports. In addition, in one or more digital ports included in each group of the K groups of digital ports, port information of virtual ports in different digital ports is the same. In this manner, a feedback process of the measurement information can be simplified, and implementation complexity can be reduced.

In a possible implementation of the first aspect or the second aspect, the measurement information is measurement information corresponding to a first carrier, the measurement information is used to determine a first weight vector of each of M digital ports corresponding to the first carrier, and the first carrier includes one or more carriers; or
the measurement information is measurement information corresponding to a first bandwidth part (bandwidth part, BWP), the measurement information is used to determine a first weight vector of each of M digital ports corresponding to the first BWP, and the first BWP includes one or more BWPs; or
the measurement information is measurement information corresponding to a first bandwidth, the measurement information is used to determine a first weight vector of each of M digital ports corresponding to the first bandwidth, and the first bandwidth includes one or more sub-bands.

Based on the foregoing technical solution, the measurement information may be used to determine a first weight vector of each of M digital ports corresponding to one or more carriers (or one or more BWPs or one or more sub-bands), to improve flexibility of implementing the solution.

A third aspect of this application provides a communication apparatus. The apparatus is a terminal device, the apparatus is a part of components (for example, a processor, a chip, or a chip system) in the terminal device, or the apparatus may be a logic module or software that can implement all or some functions of the terminal device. In the third aspect and possible implementations of the third aspect, an example in which the communication apparatus is the terminal device is used for description.

The apparatus includes a processing unit and a transceiver unit. The transceiver unit is configured to receive a reference signal, where the reference signal is sent through M digital ports, M is a positive integer, a first digital port in the M digital ports includes N₁ virtual ports, and N₁ is an integer greater than or equal to 1. The processing unit is configured to determine measurement information. The transceiver unit is further configured to send the measurement information, where the measurement information includes first information obtained by performing measurement based on a reference signal sent through the first digital port, the first information is determined based on N₁ pieces of channel information, the N₁ pieces of channel information are determined respectively by using reference signals sent through the N₁ virtual ports, and the first information is used to determine weights of the N₁ virtual ports in the first digital port.

In the third aspect of this application, the component modules of the communication apparatus may be further configured to perform the steps performed in the possible implementations of the first aspect, and achieve corresponding technical effects. For details, refer to the first aspect. Details are not described herein again.

A fourth aspect of this application provides a communication apparatus. The apparatus is a network device, the apparatus is a part of components (for example, a processor, a chip, or a chip system) in the network device, or the apparatus may be a logic module or software that can implement all or some functions of the network device. In the fourth aspect and possible implementations of the fourth aspect, an example in which the communication apparatus is the network device is used for description.

The apparatus includes a processing unit and a transceiver unit. The processing unit is configured to determine a reference signal. The transceiver unit is configured to send the reference signal, where the reference signal is sent through M digital ports, M is a positive integer, a first digital port in the M digital ports includes N₁ virtual ports, and N₁ is an integer greater than or equal to 1. The transceiver unit is further configured to receive measurement information, where the measurement information includes first information obtained by performing measurement based on a reference signal sent through the first digital port, the first information is determined based on N₁ pieces of channel information, and the N₁ pieces of channel information are determined respectively by using reference signals sent through the N₁ virtual ports.

In the fourth aspect of this application, the component modules of the communication apparatus may be further configured to perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory, the memory is configured to store a program or instructions, and the at least one processor is configured to execute the program or the instructions, to enable the apparatus to implement the method in any possible implementation in either of the first aspect and the second aspect.

A sixth aspect of this application provides a communication apparatus, including at least one logic circuit and an input/output interface. The logic circuit is configured to perform the method in any possible implementation in either of the first aspect and the second aspect.

A seventh aspect of this application provides a communication system. The communication system includes the first communication apparatus and the foregoing second communication apparatus described above.

An eighth aspect of this application provides a computer-readable storage medium. The storage medium is configured to store one or more computer-executable instructions. When the computer-executable instructions are executed by a processor, the processor performs the method in any possible implementation in either of the first aspect and the second aspect.

A ninth aspect of this application provides a computer program product (also referred to as a computer program). When the computer program in the computer program product is executed by a processor, the processor performs the method in any possible implementation in either of the first aspect and the second aspect.

A tenth aspect of this application provides a chip system. The chip system includes at least one processor, configured to support a communication apparatus in implementing the method in any possible implementation in either of the first aspect and the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the third aspect to the tenth aspect, refer to the technical effects brought by different designs in the first aspect and the second aspect. Details are not described herein again.

### BRIEF DESCRIPTION OF DRAWINGS

FIG. 1a is a diagram of a signal transmission mode according to this application;
FIG. 1b is another diagram of a signal transmission mode according to this application;
FIG. 1c is another diagram of a signal transmission mode according to this application;
FIG. 1d is a diagram of a signal transmission process according to this application;
FIG. 1e is another diagram of a signal transmission process according to this application;
FIG. 2 is a diagram of a communication system according to this application;
FIG. 3 is a diagram of a communication method according to this application;
FIG. 4a is a diagram of reference signal transmission according to this application;
FIG. 4b is another diagram of reference signal transmission according to this application;
FIG. 5 is another diagram of reference signal transmission according to this application;
FIG. 6 is another diagram of reference signal transmission according to this application;
FIG. 7 is another diagram of reference signal transmission according to this application;
FIG. 8 is another diagram of reference signal transmission according to this application;
FIG. 9 is another diagram of reference signal transmission according to this application;
FIG. 10 is a diagram of a communication apparatus according to this application;
FIG. 11 is another diagram of a communication apparatus according to this application;
FIG. 12 is another diagram of a communication apparatus according to this application; and
FIG. 13 is another diagram of a communication apparatus according to this application.

### DESCRIPTION OF EMBODIMENTS

First, some terms in embodiments of this application are described for ease of understanding by a person skilled in the art.
(1) Configuration and preconfiguration: In this application, both configuration and preconfiguration are used. The configuration means that a network device such as a base station or a server sends configuration information of some parameters or parameter values to a terminal by using a message or signaling, so that the terminal determines a communication parameter or a transmission resource based on the values or the information. Similar to the configuration, the preconfiguration may be a manner in which a network device such as a base station or a server sends parameter information or a value to a terminal through a communication link or a carrier, or may be a manner in which a corresponding parameter or parameter value is defined in a standard or a related parameter or value is set in a terminal device in advance. This is not limited in this application. Further, these values and parameters may be changed or updated.
(2) In this application, "indicating" may include "directly indicating" and "indirectly indicating". When a piece of indication information is described as indicating A, it may be understood that the indication information carries A, directly indicates A, or indirectly indicates A.

In this application, information indicated by the indication information is referred to as to-be-indicated information. During specific implementation, the to-be-indicated information may be indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit side device by sending configuration information to a receive side device. For example, the configuration information may include but is not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE), and the physical layer signaling includes, for example, downlink control information (downlink control information, DCI).

(3) Reference signal (reference signal, RS): is also referred to as a pilot signal. In a communication system, to send and receive data, obtain system synchronization, and feed back channel information, an uplink channel or a downlink channel needs to be estimated. Channel estimation is a process of reconstructing or restoring a received signal to compensate for signal distortion caused by channel fading and noise-induced attenuation, and tracks changes of a channel in time domain and frequency domain by using standard signals predicted by a transmitter and a receiver. The standard signal is also referred to as a reference signal, is distributed on different resource elements (resource element, RE) in time-frequency two-dimensional space in an orthogonal frequency division multiplexing (orthogonal frequency division multiplexing, OFDM) symbol, and has a known amplitude and phase.

At a physical layer, uplink communication may include transmission of an uplink physical channel and an uplink signal. The uplink physical channel includes a random access channel (random access channel, PRACH), an uplink control channel (physical uplink control channel, PUCCH), an uplink data channel (physical uplink shared channel, PUSCH), and the like. The uplink signal includes a channel sounding signal (sounding reference signal, SRS), an uplink control channel demodulation reference signal (PUCCH demodulation reference signal, PUCCH-DMRS), an uplink data channel demodulation reference signal (PUSCH demodulation reference signal, PUSCH-DMRS), an uplink phase noise tracking signal (phase noise tracking reference signal, PTRS), an uplink positioning signal (uplink positioning RS), and the like.

At the physical layer, downlink communication may include transmission of a downlink physical channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal (PDCCH demodulation reference signal, PDCCH-DMRS), a downlink data channel demodulation reference signal (PDSCH demodulation reference signal, PDSCH-DMRS), a phase noise tracking signal PTRS, a channel state information reference signal (channel state information reference signal, CSI-RS), a cell reference signal (Cell reference signal, CRS), a tracking reference signal (tracking reference signal, TRS), a positioning reference signal (positioning RS), and the like.
(4) Terms "system" and "network" in embodiments of this application may be used interchangeably. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.
(5) "Sending" and "receiving" in embodiments of this application represent signal transmission directions. For example, "sending information to a device X" may be understood as that a destination end of the information is the device X, and may include direct sending through an air interface, or indirect sending by another unit or module through an air interface. "Receiving information from a device Y" may be understood as that a source end of the information is the device Y, and may include direct receiving from the device Y through an air interface, or indirect receiving from the device Y from another unit or module through an air interface. "Sending" may also be understood as "outputting" of a chip interface, and "receiving" may also be understood as "inputting" of the chip interface.

A communication process between an entity A and an entity B is used as an example. In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein may be radio access network (radio access network, RAN) nodes or terminals, or may be modules inside the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a central unit (central unit, CU) and a distributed unit (distributed unit, DU). Information sending and receiving may alternatively be information exchange between different modules inside an apparatus, for example, information exchange between a terminal chip and another module in the terminal, or information exchange between a base station chip and another module in the base station.

(6) Precoding technology: When a channel status is known, a transmit side may process a to-be-sent signal by using a precoding matrix that matches a channel, and then send the to-be-sent signal, so that a precoded sent signal adapts to the channel. Therefore, in comparison with a processing process in which a receive side receives a non-precoded sent signal and eliminates inter-channel impact, a processing process in which the receive side receives the precoded sent signal and eliminates inter-channel impact is less complicated. Therefore, precoding the to-be-sent signal improves received signal quality (for example, a signal to interference plus noise ratio (signal to interference plus noise ratio, SINR)). Transmission between the transmit side and a plurality of receive sides can be further performed on a same time-frequency resource by using the precoding technology. That is, multi-user multiple-input multiple-output (multi-user multiple-input multiple-output, MU-MIMO) is implemented.

Optionally, the transmit side may be a network device, and the receive side may be a terminal device. Alternatively, the transmit side may be a terminal device, and the receive side may be a terminal device.

In an implementation, a multiple-input multiple-output (Multiple-Input Multiple-Output, MIMO) technology is used to increase a system capacity and improve a throughput. A mathematical expression is y = Hx + n, where y is a received signal, H is channel information of a MIMO channel, x is a sent signal, and n is noise. In a communication system with a plurality of antennas, signals of a plurality of transmit antennas are superimposed on any receive antenna. Therefore, a method for sending a signal by a transmit side affects system performance, and it is usually complex to restore the sent signal on a receive side. In this context, precoding (Precoding) is used to reduce system overheads and maximize a MIMO system capacity in one aspect, and to reduce complexity of a receiver in eliminating inter-channel impact in another aspect. In this case, a mathematical expression is y = HPx + n, where P is a precoding matrix (or vector). To simplify implementation complexity, P may be selected from a predefined matrix (or vector) set, the set is referred to as a codebook (Codebook), and this method is also referred to as a codebook-based sending method. If the transmit side may know all information of H, P may be obtained by the transmit side autonomously. This method is also referred to as a non-codebook (Non-codebook, NCB) sending method.

It should be understood that related descriptions of the precoding technology are merely an example for ease of understanding, and are not intended to limit the protection scope of embodiments of this application. In a specific implementation process, the transmit side may alternatively perform precoding in another manner. For example, when channel information (for example, but not limited to a channel matrix) cannot be obtained, precoding is performed by using a preset precoding matrix or by using weighted processing. For brevity, specific content thereof is not described in this specification.

(7) Precoding matrix indicator (PMI): may indicate a precoding matrix. The precoding matrix may be, for example, a precoding matrix determined by a terminal device based on a channel matrix of one frequency domain unit. The channel matrix may be determined by the terminal device through channel estimation or in another manner or based on channel reciprocity. However, it should be understood that a specific method used by the terminal device to determine the precoding matrix is not limited to the foregoing descriptions. For a specific implementation, refer to related literature. For brevity, details are not described herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application.

It should be noted that, according to the method provided in embodiments of this application, the network device may determine, based on a feedback of the terminal device, a channel state information (channel state information, CSI) RS port, a frequency domain discrete Fourier transform (discrete Fourier transform, DFT) vector, and a space-frequency vector combination coefficient that are used to construct a precoding vector, and further determine a precoding matrix corresponding to each frequency domain unit. The precoding matrix may be directly used for downlink data transmission. Alternatively, some beamforming methods, including, for example, zero forcing (zero forcing, ZF), regularized zero-forcing (regularized zero-forcing, RZF), a minimum mean-square error (minimum mean-squared error, MMSE), and a maximum signal-to-leakage-and-noise ratio (signal-to-leakage-and-noise, SLNR), may be performed to obtain a precoding matrix that is finally used for downlink data transmission. This is not limited in this application. Unless otherwise specified, all precoding matrices below may be precoding matrices determined based on the method provided in this application.

It may be understood that the precoding matrix determined by the terminal device may be understood as a to-be-fed-back precoding matrix. The terminal device may indicate the to-be-fed-back precoding matrix by using a precoding indicator (precoding matrix indicator, PMI), so that the network device restores the precoding matrix based on the PMI. It may be understood that the precoding matrix restored by the network device based on the PMI may be the same as or similar to the to-be-fed-back precoding matrix.

In downlink channel measurement, higher approximation between the precoding matrix determined by the network device based on the PMI and the precoding matrix determined by the terminal device indicates that the precoding matrix determined by the network device for data transmission is more adaptable to a channel status. Therefore, signal received quality can be improved.

(8) Antenna port: may be briefly referred to as a port. It may be understood as a transmit antenna identified by a receive side, or a transmit antenna that can be spatially distinguished. One antenna port may be preconfigured for each virtual antenna, each virtual antenna may be a weighted combination of a plurality of physical antennas, and each antenna port may correspond to one reference signal. Therefore, each antenna port may be referred to as a reference signal port, for example, a CSI-RS port, a demodulation reference signal (demodulation deference signal, DMRS) port, or an SRS port.

The antenna port is a logical concept, and usually, there is no direct correspondence between an antenna port and a physical antenna. The antenna port is usually associated with a reference signal, and the antenna port may be understood as a transceiver interface on a channel through which the reference signal passes. For a low frequency, one antenna port may correspond to one or more antenna array elements. The array elements are used to jointly send a reference signal. The receive side may consider the array elements as a whole, and does not need to distinguish between the array elements. For a high-frequency system, the antenna port may correspond to one beam. Similarly, the receive side only needs to consider the beam as an interface, and does not need to distinguish between array elements.

In addition, a port group may be a set corresponding to a plurality of antenna ports. In a manner, a plurality of digital ports of a network device are grouped to form a plurality of port groups. In another manner (especially in a hybrid digital-analog beam architecture), the port group may be a plurality of digital ports corresponding to a same analog beam, also briefly referred to as a port group or a digital-analog port group. Alternatively, the port group may be a digital port set corresponding to a plurality of analog beams, also briefly referred to as a port group or a digital-analog port group. Alternatively, a plurality of digital ports of a same analog beam are grouped into a plurality of subsets, and each subset is referred to as a port group or a digital-analog port group.
(9) Channel state information (CSI) report (report): is information that is reported by a receive side (for example, a terminal device) to a transmit side (for example, a network device) in a wireless communication system and that is used to describe a channel attribute of a communication link. For example, the CSI report may include but is not limited to a precoding matrix indicator (PMI), a rank indicator (RI), a channel quality indicator (CQI), a channel state information reference signal (channel state information reference signal, CSI-RS), a CSI-RS resource indicator (CSI-RS resource indicator, CRI), and a layer indicator (layer indicator, LI). It should be understood that the foregoing listed specific content of the CSI is merely an example for description, and shall not constitute any limitation on this application. The CSI may include one or more of the foregoing listed content, or may include information, other than the foregoing listed content, representing the CSI. This is not limited in this application.
(10) Beam: A beam (beam) and a beam pair (beam pair link, BPL) are introduced into a communication system. The beam is a communication resource. Beams may be classified into transmit beams and receive beams. A technology for forming the beam may be a beamforming technology or another technical means. Beamforming includes transmit beamforming and receive beamforming.

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent based on the different beams. Optionally, a plurality of beams having a same communication feature or similar communication features may be considered as one beam. The beam may include one or more antenna ports, configured to transmit a data channel, a control channel, a sounding signal, and the like. For example, a transmit beam may refer to signal strength distribution formed in different directions in space after a signal is transmitted through an antenna, and a receive beam may refer to distribution of signal strength that is of a radio signal received through an antenna and that is in different directions in space. It may be understood that the one or more antenna ports forming the beam may alternatively be considered as one antenna port set. In a protocol, the beam may also be embodied as a spatial filter (spatial filter).

Transmit beam: is a beam that has spatial directivity and that is formed by a signal sent by a transmit side device by using a specific beamforming weight. In an uplink direction, the transmit side device may be a terminal. In a downlink direction, the transmit side device may be a network device.

Receive beam: is a beam that has spatial directivity and that is formed by a signal received by a receive side device by using a specific beamforming weight. In an uplink direction, the receive side device may be a network device. In a downlink direction, the receive side device may be a terminal.

Transmit beamforming: When the transmit side device with an antenna array sends a signal, a specific amplitude and phase are set on each antenna element of the antenna array, so that the sent signal has specific spatial directivity, that is, the signal has a high signal power in some directions, and has a low signal power in some directions, where a direction in which the signal power is the highest is a direction of the transmit beam. The antenna array includes a plurality of antenna elements. The additional specific amplitude and phase are a beamforming weight.

Receive beamforming: When the receive side device with an antenna array receives a signal, a specific amplitude and phase are set on each antenna element of the antenna array, so that a power gain of the received signal is directional, that is, the power gain is high when the signal is received in some directions, and the power gain is low when the signal is received in some directions. A direction in which the power gain is the highest when the signal is received is a direction of the receive beam. The antenna array includes a plurality of antenna elements. The additional specific amplitude and phase are a beamforming weight.

Optionally, sending a signal by using a transmit beam may be understood as sending the signal by using a beamforming weight.

Optionally, receiving a signal by using a receive beam may be understood as receiving the signal by using a beamforming weight.

Usually, different beams may be considered as different resources. Same information or different information may be sent by using (or through) different beams. A beam pair is established based on the concept of the beam. One beam pair usually includes one transmit beam of the transmit side device and one receive beam of the receive side device.

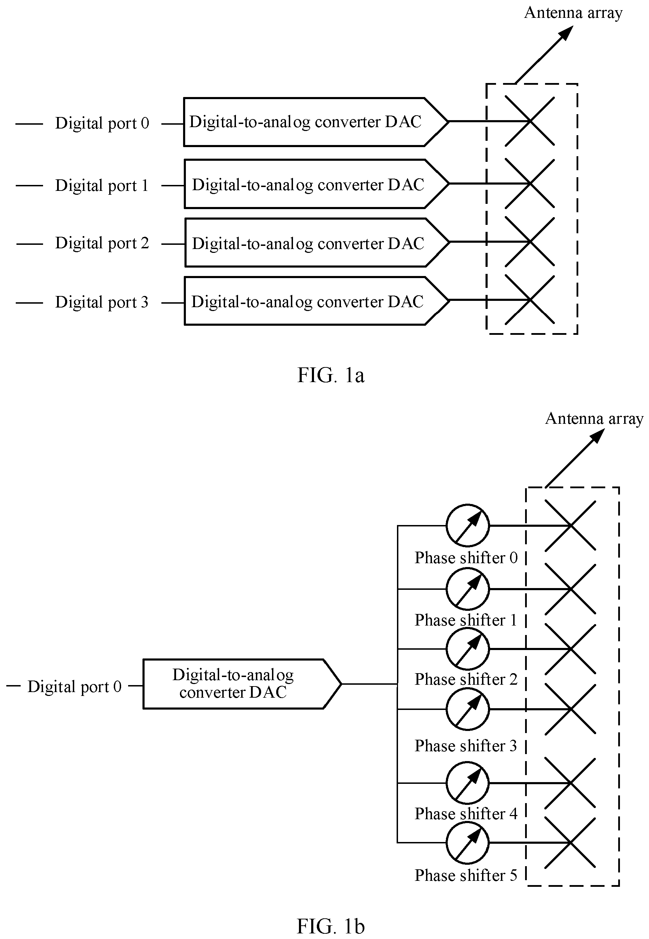

An example in which a network device is a base station is used below to describe a beam implementation process with reference to implementation content shown in FIG. 1a to FIG. 1c. In a communication system of a high frequency band, the base station (and terminals of a part of frequency bands) usually uses a large-scale array antenna (for example, 500 to more than 1000 antenna elements), and a high array gain is used to resist a path loss caused by an increase in the frequency band, to improve a coverage capability. From the perspective of an implementation of the base station, for the same large array, array weighting manners (that is, different beamforming manners) for different frequency bands and different array scales are roughly classified into the following three types according to beamforming implementation solutions.

An implementation is digital beamforming (digital beamforming, DBF), and a basic structure of digital beamforming is shown in FIG. 1a. Each antenna element or each group of antenna elements is directly connected to one digital channel. This structure is a typical low-frequency band massive multiple-input multiple-output (massive MIMO) structure. Each antenna signal is directly transformed to a digital domain, and subsequent array weighting is performed in digital domain. Therefore, this is referred to as digital beamforming. Signal processing in digital domain has a highest degree of freedom and may support a complex signal processing manner. Therefore, the DBF architecture has optimal performance on the same array scale. In addition, power consumption and costs of a digital-to-analog converter (digital-to-analog converter, DAC)/analog-to-digital converter (analog-to-digital converter, ADC) are high (especially in a case of a high bandwidth). Usually, DBF costs are also the highest on the same array scale.

Another implementation is analog beamforming (analog beamforming, ABF), and a structure of analog beamforming is shown in FIG. 1b. Each antenna element or each group of antenna elements is connected to one analog phase shifter, and then a plurality of antenna elements are combined in analog domain and then pass through one digital-to-analog/analog-to-digital converter. Compared with DBF, the entire ABF array corresponds to only one digital-to-analog/analog-to-digital converter. Therefore, the ABF architecture has a greatest advantage of low costs and power consumption. A bottleneck of ABF is also evident. A setting of the phase shifter in analog domain determines a beam direction after beamforming. Because electrical signals are directly combined in analog domain, and cannot be weighted through digital signal processing like in DBF, in ABF, the setting of the phase shifter (that is, steering an analog beam toward a target terminal) needs to be preconfigured during receiving and sending. This process needs to be completed through beam sweeping in a link establishment phase, causing an extra delay. Usually, once the analog beam is blocked or moved, causing misalignment, system link quality is rapidly degraded, or even a link is interrupted. Therefore, communication reliability of ABF is not as good as that of DBF.

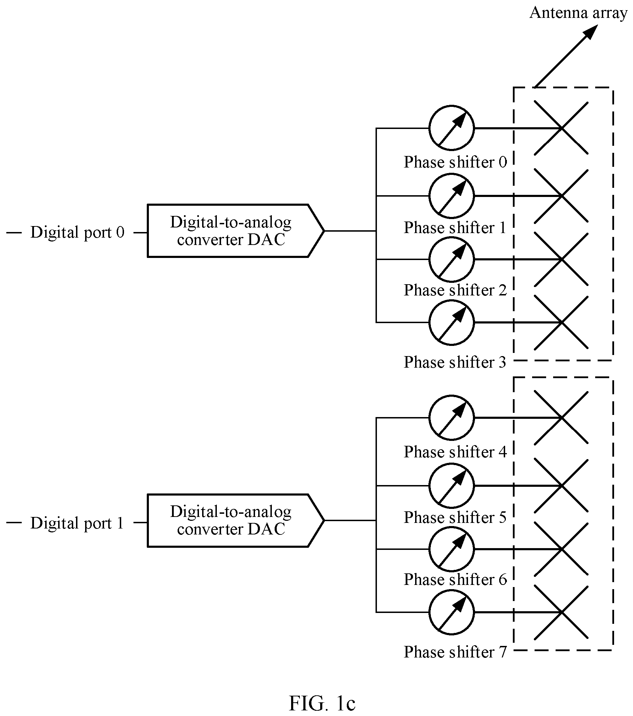

Another implementation is hybrid beamforming (hybrid beamforming, HBF), and a structure of hybrid beamforming is shown in FIG. 1c, which is an intermediate form of ABF and DBF. In the figure, a three-channel HBF architecture is used as an example, where each channel corresponds to two analog phase shifters. HBF has a specific quantity of digital ports to support digital beamforming, and each digital port drives one ABF subarray. Compared with ABF, on the same array scale, a scale of an analog subarray driven by each digital channel is smaller (four in FIG. 1c vs six in FIG. 1b). Therefore, a beam is wider, reliability is better, and beam sweeping overheads are lower. Usually, a ratio of digital ports to analog phase shifters of HBF varies with different frequencies and system design requirements. For example, in a high frequency band, a quantity of digital ports is small (4 to 16), and a single digital channel corresponds to more analog phase shifters (16 to 32), closer to ABF; while in a low frequency band, the system has more digital ports (32 to 128), and a single digital channel corresponds to fewer analog phase shifters (for example, 2 to 10).

Usually, both the HBF architecture and the ABF architecture have analog beams. When beams are aligned with a communication target, signal quality is improved. A direction (determined based on a beam weight) of the analog beam needs to be configured before receiving and sending. For a terminal, a process in which the base station selects an analog beam is referred to as beam training or beam sweeping. In beam sweeping, the base station usually sends reference signals by using different analog beam weights, and the terminal separately measures the reference signals, and feeds back measurement results of the reference signals, to assist the base station in determining a specific beam with optimal quality.

(11) CSI-RS pilot mapping: A pilot pattern (pattern) means a mapping manner of a pilot port in a time-frequency resource, including port time division and port frequency division arrangement methods and corresponding scrambling code information. Configuration information of a pilot includes at least one of the following: a configuration parameter index, a quantity of ports, a density (indicating that a group of pilots is mapped per 1/ρ RB), a code division multiplexing type (code division multiplexing type, CDM type), time-frequency information of a code division multiplexing group, a code division multiplexing group index, index information of a frequency domain resource in a code division multiplexing group, index information of a frequency domain resource in a code division multiplexing group, and index information of a time domain resource in a code division multiplexing group.

Optionally, the code division multiplexing type includes:
noCDM (no code division multiplexing);
frequency domain code division, denoted as -FD# or fd-CDM#, where # is a number, and indicates that frequency domain code division is performed on # ports in one CDM group; and
time domain code division, denoted as -TD# or td-CDM#, where # is a number, indicating that time domain code division is performed on # ports in one CDM group.

The foregoing code division types may be combined. For example, cdm4-FD2-TD2 indicates that one CDM group includes four ports, which are multiplexed in two frequency division dimensions and two time division dimensions. An 8-port configuration for Row=8 is used as an example. There are two CDM groups in the configuration (which can be learned from CDM indexes for Row=8), each group includes four ports (cdm4-FD2-TD2), and orthogonal codes of the four ports in the group whose CDM type defined in a protocol is 'cdm4-FD2-TD2' are respectively shown in four rows of information whose index (index) numbers are 0 to 3 in Table 1.

**Table 1**

| Index | [w_{f}(0) w_{f}(1)] | [wₜ(0) wₜ(1)] |
|---|---|---|
| 0 | [+1 +1] | [+1 +1] |
| 1 | [+1 -1] | [+1 +1] |
| 2 | [+1 +1] | [+1 -1] |
| 3 | [+1 -1] | [+1 -1] |

w_{f} represents frequency domain code division, wₜ represents time domain code division, and each has two groups of orthogonal codes. A port 0 is orthogonal to a port 1 in frequency domain code, the port 0 is orthogonal to a port 2 in time domain code, and the port 0 is orthogonal to a port 3 in time domain code and frequency domain code. 0 to 3 and 4 to 7 belong to two code division multiplexing groups respectively (physical meaning: a same time-frequency resource is occupied in a group, ports are distinguished through code division, and resources are orthogonal between code division groups.

(12) Codebook-based feedback. A correlation between channels causes interference between channels, resulting in a capacity loss. Before data enters a wireless channel for transmission, weighting processing (which may be understood as digital beamforming mentioned above) is performed on data on each antenna port. This is equivalent to simplifying a channel matrix of a multi-antenna system, and eliminating the correlation between the channels as much as possible, to improve performance and a capacity of data transmission of a MIMO system.

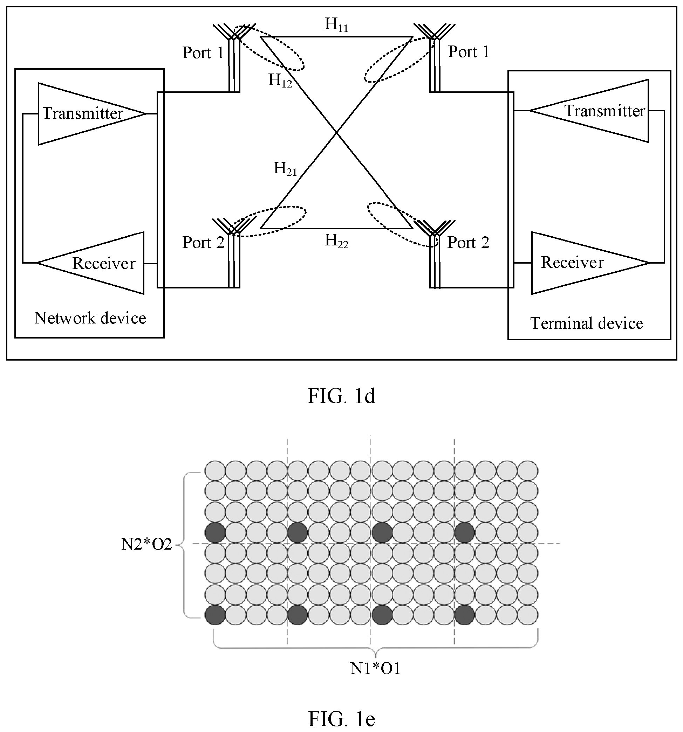

As shown in FIG. 1d, a network device sends a reference signal to a terminal device through a port 1 and a port 2. The terminal device may separately estimate channel information Hi,j (i,j={1, 2}) between transmit ports 1 and 2 and receive ports 1 and 2 based on the received reference signal. The terminal device may estimate a precoding matrix V of a transmit side based on the channel information. A method for obtaining the matrix V belongs to an algorithm implementation of the terminal device, and a classic implementation method is SVD decomposition. It is assumed that a channel matrix H is received by a receive side, and the matrix may be decomposed through SVD decomposition into: $H = \left[\begin{matrix}{H}_{11} & {H}_{12} \\ {H}_{21} & {H}_{22}\end{matrix}\right] = {UDV}^{H}$

Both U and V are unitary matrices, and D is a diagonal matrix. The terminal device may feed back the matrix V (or a column vector of V, depending on a quantity of streams that need to be transmitted) to the transmit side as a precoding matrix, and a precoded received signal is: $y = HVx = {UAV}^{H} Vx = UDx$

The terminal device may process received data by using the U matrix obtained through decomposition, to obtain: ${U}^{H} y = {U}^{H} UDx = Dx$

Because D is a diagonal matrix, an x signal can be directly restored.

For the foregoing manner of obtaining V by the network device, there are two cases.

Manner 1: The network device estimates a downlink channel matrix H based on measurement of an uplink SRS and reciprocity between uplink and downlink channels, to obtain V. This manner may be applied to a time division duplexing (time division duplexing, TDD) system. The manner 1 is also referred to as SRS-based precoding.

Manner 2: The terminal estimates a channel matrix H based on measurement of a downlink reference signal, to obtain V, and then feeds back V to a network device side. The manner 2 is also referred to as PMI-based precoding.

In the manner 2, to reduce feedback overheads, a limited quantity of quantization feedbacks is defined in a protocol for the precoding matrix V. These limited optional precoding quantization value matrices are also referred to as a codebook, and the precoding matrices in the codebook are numbered. The terminal may feed back these related numbers or parameters of the codebook. For example, the following describes the implementation process by using three steps.

Step 1: The network device sends configuration information to the terminal device, where the configuration information includes quantities of horizontal and vertical ports and a DFT oversampling multiple. For example, the configuration information may include one or more of a quantity of CSI-RS ports, N1, N2, O1, and O2.

N1 represents a quantity of logical antenna ports in a direction of same polarization, and usually refers to a horizontal direction; N2 represents a quantity of logical antenna ports in another direction of the same polarization, and usually refers to a vertical direction; O1 represents a DFT oversampling multiple in the direction (horizontal direction) of N1; and O2 represents a DFT oversampling multiple in the direction (vertical direction) of N2.

Step 2: The terminal device determines a codebook set.

16 CSI-RS ports are used as an example. In this case, the terminal device may determine, based on the configuration information or preconfiguration information, that a value of N1 is 4 and a value of N2 is 2, or a value of N1 is 8 and a value of N2 is 1. An example in which a value of N1 is 4 and a value of N2 is 2 is used. A physical meaning corresponding to N1 and N2 is as follows: When beamforming is performed, a total of N1*N2 weight vectors may be formed in a horizontal dimension of N1 and a vertical dimension of N2, and these weight vectors are orthogonal to each other, that is, no interference exists between beams formed through weighting by using these weight vectors. A physical meaning of O1 and O2 is as follows: A quantity of weight vectors is increased in the horizontal direction and the vertical direction through DFT oversampling, and therefore more weight vectors can be generated. Values of O1 and O2 also determine a beam density in a horizontal direction and a beam density in a vertical direction when an antenna form is specified, that is, when N1 and N2 are determined. Larger values of O1 and O2 indicate a smaller beam step and higher accuracy during beam sweeping, but at the cost of weight vectors being no longer orthogonal, that is, interference existing between beams. N1*O1 determines a quantity of weight vectors in the horizontal direction in a beam set, and N2*O2 determines a quantity of weight vectors in the vertical direction in the beam set.

In an example shown in FIG. 1e, N1 and N2 are (4, 2) respectively, and O1 and O2 are (4, 4) respectively. When oversampling is not performed, a DFT codebook set includes a dark blue codebook.

Specifically, horizontal and vertical weight vectors are: $X 1 = {v}_{t} = {\left[1 {e}^{\frac{j 2 πl}{N 1 O 1}} {e}^{\frac{j 2 π ∗ 2 l}{N 1 O 1}} … {e}^{\frac{j 2 π \left(N1-1\right) l}{N 1 O 1}}\right]}^{T}$ $X 2 = {u}_{k} = {\left[1 {e}^{\frac{j 2 πk}{N 2 O 2}} {e}^{\frac{j 2 π ∗ 2 k}{N 2 O 2}} … {e}^{\frac{j 2 π \left(N2-1\right) k}{N 2 O 2}}\right]}^{T}$

X1 is a weight vector in the horizontal direction, and a length of a vector is N1. A specific quantity of vectors is determined based on a quantity of values of 1, that is, 1 also represents a specific group of weights selected in the horizontal direction.

X2 is a weight vector in the vertical direction, and a length of a vector is N2. A specific quantity of vectors is determined based on a quantity of values of k, that is, k also represents a specific group of weights selected in the vertical direction.

A codebook set W satisfies: $W = X 1 ⊗ X 2$

⊗ represents a Kronecker product (Kronecker Product). That is, a result represented by a Kronecker product of X1 and X2 may be a weight result of one group of polarized antennas, and is usually in a form of a diagonal block with another group of polarized antennas.

Step 3: The terminal device measures a pilot signal (in this application, the pilot signal and the reference signal are interchangeable), and feeds back a codebook. For example, the terminal measures a pilot signal, and determines an optimal codebook for feedback. For determined l and m, the Kronecker product of X1 and X2 determines a beam in a specific direction on a same polarized antenna. For codebook feedback, a Type I Single-Panel Codebook is used as an example. The terminal device needs to feed back two parameters i₁ and i₂, and i₁ includes a plurality of parameters. A quantity of parameters is determined based on a quantity of layers. ${i}_{1} = \left\{\begin{matrix}\left[{i}_{1 , 1} {i}_{1 , 2}\right] v \neq \left\{2, 3, 4\right\} \\ \left[\left[{i}_{1 , 1} {i}_{1 , 2} {i}_{1 , 3}\right]\right. v = \left\{2, 3, 4\right\}\end{matrix}\right.$
i₂: represents a polarization phase quantization index;
i_{1,1}: represents a beam index in a vertical dimension;
i_{1,2}: represents a beam index in a horizontal dimension; and
i_{1,3}: represents selection of rotation factors in the horizontal dimension and the vertical dimension, and is mainly related to an antenna array form and a quantity of ports.

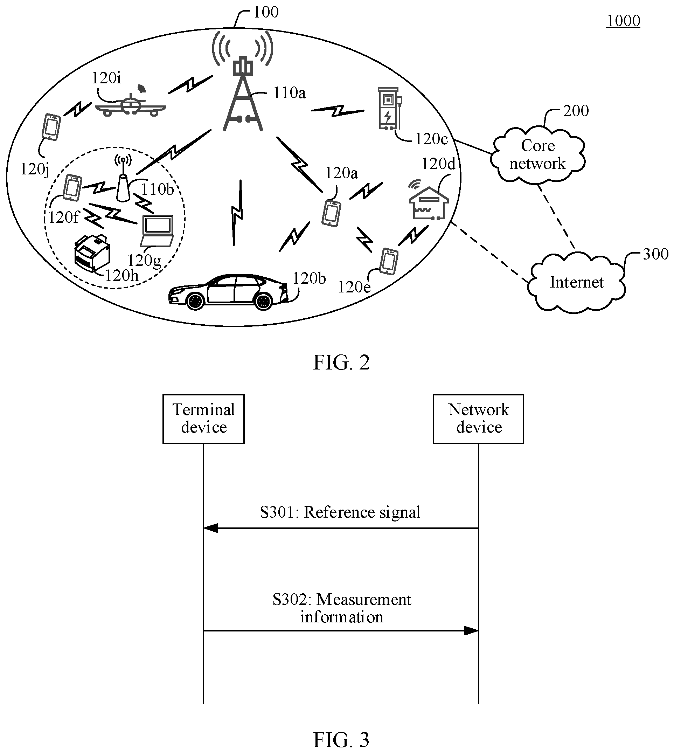

FIG. 2 is a diagram of an architecture of a communication system 1000 to which embodiments of this application are applied. As shown in FIG. 2, the communication system includes a radio access network (radio access network, RAN) 100 and a core network 200. Optionally, the communication system 1000 may further include an internet 300. The RAN 100 includes at least one RAN node (for example, 110a and 110b in FIG. 2, which are collectively referred to as 110), and may further include at least one terminal (for example, 120a to 120j in FIG. 2, which are collectively referred to as 120). The RAN 100 may further include another RAN node, for example, a wireless relay device and/or a wireless backhaul device (not shown in FIG. 2). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 2), may be a micro base station or an indoor base station (for example, 110b in FIG. 2), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to technical specifications related to the 3GPP. The RU may be configured to implement a receiving function and a sending function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: a CU-control plane and a CU-user plane.

In different systems, the RAN node may have different names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 2.

**Table 2**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

For ease of description, the following is described by using an example in which the base station serves as a RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be at a fixed position, or may be mobile. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, relative to 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource for wireless communication is not limited in embodiments of this application.

In embodiments of this application, a function of the base station may alternatively be performed by a module (for example, a chip) in the base station, or may be performed by a control subsystem including a function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In a wireless communication system (for example, the communication system shown in FIG. 2), as a key technology in wireless communication, a MIMO technology may be used to satisfy a requirement for high-rate transmission. In an implementation example, to send data to the terminal device, the network device may perform precoding on a digital port, and select proper encoding and a proper modulation order. For example, precoding is for making an antenna (or a beam) more match a channel, to ensure better signal quality and less interference when sent data arrives at a terminal side, and a good modulation order and a good bit rate can ensure a maximum channel transmission capacity in a case of reliable data transmission. Settings of precoding and a modulation and coding scheme (modulation and coding scheme, MCS) need to be determined based on channel quality and a channel response. In other words, the network device may implement transmission quality of data transmission based on a measurement result of channel measurement.

However, in a communication process implemented based on the MIMO technology, how to implement channel measurement is an urgent technical problem to be resolved.

To resolve the foregoing problem, this application provides a communication method and a related device. The following provides detailed descriptions with reference to the accompanying drawings.

FIG. 3 is a diagram of a communication method according to this application. The method includes the following steps.

It should be noted that in this application, the method provided in this application is described by using an example in which a network device and a terminal device are used as execution bodies of an interaction example. However, the execution bodies of the interaction example are not limited in this application. For example, the method performed by the network device may alternatively be performed by a module (for example, a chip, a chip system, or a processor) in the network device, or may be implemented by a logical node, a logical module, or software that can implement all or some functions of the network device. The method performed by the terminal device may alternatively be performed by a module (for example, a chip, a chip system, or a processor) in the terminal device, or may be implemented by a logical node, a logical module, or software that can implement all or some functions of the terminal device.

The method shown in FIG. 3 includes steps S301 and S302. The following separately describes the steps.

S301: The network device sends a reference signal. Correspondingly, the terminal device receives the reference signal. The reference signal is sent in L₁ time units by using L₁ first weights respectively, L₁ is an integer greater than 1, an i^{th} first weight in the L₁ first weights is obtained by using an i^{th} second weight in L₁ second weights and a third weight, the L₁ second weights are orthogonal, and a value of i ranges from 1 to L₁.

It should be understood that before step S301, the network device may send configuration information of the reference signal, and then the network device sends the reference signal based on the configuration information in step S301. Correspondingly, for the terminal device, the terminal device may receive the configuration information of the reference signal, and receive the reference signal based on the configuration information in step S301. Usually, the configuration information may include time domain resource configuration information, frequency domain resource configuration information, and the like of the reference signal.

It should be understood that after the terminal device receives the reference signal in step S301, the terminal device may measure the received reference signal to obtain measurement information, and then perform step S302.

S302: The terminal device sends the measurement information. Correspondingly, the network device receives the measurement information. The measurement information is obtained by performing measurement based on the reference signal.

In this application, in the L₁ time units (or L₂ time units mentioned below), each time unit may be one or more symbols, one or more mini-slots, one or more slots, one or more subframes, or the like.

Optionally, in step S301, the L₁ time units used to send the reference signal are consecutive in time domain. Because channel information of different time units consecutive in time domain is strongly associated, in this manner, the terminal device can reflect same or similar channel information as much as possible based on different measurement results corresponding to the reference signal in the L₁ time units, to obtain measurement information with higher accuracy.

Optionally, in step S301, at least two of the L₁ time units used to send the reference signal are non-consecutive in time domain.

It should be understood that in step S301, that the reference signal is sent in the L₁ time units by using the L₁ first weights respectively may be understood as that the L₁ time units are in one-to-one correspondence with the L₁ first weights. For example, a weight of the reference signal in an i^{th} time unit in the L₁ time units is the i^{th} first weight in the L₁ first weights, and the value of i ranges from 1 to L₁.

Optionally, a reference signal in each time unit may be considered as one reference signal, that is, "the reference signal carried in the L₁ time units" may be considered as L₁ reference signals. Correspondingly, the foregoing method may be performed one or more times, that is, receiving and sending processes of one or more L₁ reference signals are implemented by using one or more L₁ time units respectively.

Alternatively, a reference signal in every L₁ time unit may be considered as one reference signal, that is, "the reference signal carried in the L₁ time units" may be considered as 1 reference signal. Correspondingly, the foregoing method may be performed one or more times, that is, receiving and sending processes of one or more reference signals are implemented by using one or more L₁ time units respectively.

It should be understood that the L₁ second weights are orthogonal, and the i^{th} first weight in the L₁ first weights is obtained by using the i^{th} second weight in the L₁ second weights and the third weight. In other words, the L₁ first weights are obtained based on the L₁ second weights. Different weights in the L₁ first weights may be orthogonal, or may be non-orthogonal. This is not limited herein.

It should be noted that, that the i^{th} first weight in the L₁ first weights is obtained by using the i^{th} second weight in the L₁ second weights and the third weight includes: the i^{th} first weight in the L₁ first weights is obtained by multiplying N₁ elements in the i^{th} second weight in the L₁ second weights by the N₁ sub-vectors in the third weight respectively.

Optionally, multiplying the N₁ elements in the i^{th} second weight by the N₁ sub-vectors in the third weight may be a product of one element and one sub-vector. For example, when the N₁ elements are *a*₀ and *a*₁ respectively (that is, N₁=2), if *f*₀ and *f*₁ are two row vectors, an obtained second weight is [*a*₀*f*₀*, a*₁*f*₁]; or if *f*₀ and *f*₁ are two column vectors, an obtained second weight is $\left[\begin{matrix}{a}_{0} {f}_{0} \\ {a}_{1} {f}_{1}\end{matrix}\right]$.

Optionally, multiplying the N₁ elements in the i^{th} second weight by the N₁ sub-vectors in the third weight may be that the N₁ sub-vectors forms a diagonal matrix, and then matrix multiplication is performed on the diagonal matrix and a vector including the N₁ elements. An example in which N₁ is 2 is used. The N₁ sub-vectors included in the third weight are *f*₀ and *f*₁ respectively. When *f*₀ and *f*₁ are two row vectors, the N₁ elements included in the second weight are *a*₀ and *a*₁ respectively, which satisfies: $\left[\begin{matrix}{f}_{0} & 0 \\ 0 & {f}_{1}\end{matrix}\right] \left[\begin{matrix}{a}_{0} \\ {a}_{1}\end{matrix}\right] = \left[\begin{matrix}{a}_{0} {f}_{0} \\ {a}_{1} {f}_{1}\end{matrix}\right]$

When *f*₀ and *f*₁ are two row vectors, the N₁ elements included in the second weight are *a*₀ and *a*₁ respectively, which satisfies: $\left[{a}_{0} {a}_{1}\right] \left[\begin{matrix}{f}_{0} & 0 \\ 0 & {f}_{1}\end{matrix}\right] = \left[{a}_{0}{f}_{0} {a}_{1}{f}_{1}\right]$

In a possible implementation, in step S301, the reference signal sent by the network device is sent through M digital ports, and M is a positive integer; and weights corresponding to a first digital port in the M digital ports in the L₁ time units are the L₁ first weights, the first digital port includes N₁ virtual ports, the second weight includes N₁ elements corresponding to the N₁ virtual ports, and N₁ is an integer greater than or equal to 1. Specifically, the reference signal is sent in the L₁ time units by using the L₁ first weights respectively, and the L₁ first weights may be weights of the first digital port in the M digital ports. The first digital port includes the N₁ virtual ports, and the second weight includes the N₁ elements corresponding to the N₁ virtual ports, that is, the L₁ second weights corresponding to the virtual ports included in the first digital port in the L₁ time units are orthogonal. In this manner, weights of virtual ports included in a same digital port in different time units are orthogonal.

In this application, the virtual port may be replaced with another term, for example, an analog port, a virtual subarray, an analog subarray, or a subarray.

Optionally, L₁ is an integer multiple of N₁. For example, N₁ and L₁ are equal.

Optionally, the N₁ virtual ports occupy a same frequency domain resource in different time units in the L₁ time units. In this manner, implementation complexity of receiving and sending the reference signal in different time units can be reduced as much as possible.

Optionally, the terminal device may further receive indication information indicating that a quantity of virtual ports included in the first digital port is N₁, and/or the terminal device may further receive indication information indicating that a quantity of time units of the reference signal is L₁. The two pieces of indication information may be carried in configuration information of the reference signal, or may be carried in other information/messages/signaling. This is not limited herein.

Optionally, N₁ and L₁ are pre-configured information. This is not limited herein.

It should be understood that, that one digital port includes one or more virtual ports (for example, the first digital port includes the N₁ virtual ports, and a second digital port described below includes N₂ virtual ports) may be understood as that signals of the digital port are received and sent through the one or more virtual ports. For example, in a signal sending process, the digital port is used to send a signal through the one or more virtual ports. For another example, in a signal receiving process, a signal received through the one or more virtual ports may be understood as a signal received through the digital port.

It can be learned from the foregoing descriptions of step S301 that the reference signal is sent in the L₁ time units by using the L₁ first weights respectively, and the L₁ first weights are determined by using the second weights and the third weight. The following describes an example of an implementation process of the second weight and the third weight.

In a possible implementation, the second weight includes N₁ elements corresponding to the N₁ virtual ports. The N₁ virtual ports included in the first digital port in the M digital ports correspond to N₁ antenna element sets respectively, each antenna element set includes one or more antenna elements, and the N₁ elements are used to adjust phases of the N₁ antenna element sets respectively. Specifically, the N₁ virtual ports included in the first digital port correspond to the N₁ antenna element sets respectively, and the N₁ elements included in the second weight are used to adjust the phases of the N₁ antenna element sets respectively. In addition, each antenna element set includes one or more antenna elements. In other words, the N₁ elements included in the second weight are used to adjust phases of antenna elements corresponding to different virtual ports in the digital port, that is, the L₁ orthogonal second weights are used to implement orthogonality of the phases of the antenna element sets corresponding to the different virtual ports.

In a possible implementation, the third weight includes N₁ sub-vectors, a dimension of a P^{th} sub-vector in the N₁ sub-vectors is the same as a quantity of antenna elements in a P^{th} antenna element set in the N₁ antenna element sets, and a value of P ranges from 1 to N₁. Specifically, the dimension of the P^{th} sub-vector in the N₁ sub-vectors included in the third weight is the same as the quantity of antenna elements in the P^{th} antenna element set in the N₁ antenna element sets. In this manner, the third weight can correspond to a weight of each of the N₁ antenna element sets.

In a possible implementation, the third weight is determined by the network device based on a beam measurement result (for example, a reference signal received power (reference signal received power, RSRP)) fed back by the terminal device. When sending a reference signal used for beam management, the network device performs weighting by using different analog weights. After performing measurement, the terminal feeds back a corresponding measurement result. The third weight may be a sending analog weight corresponding to a reference signal with a maximum RSRP in the feedback result, or may be a sending analog weight corresponding to a reference signal in the feedback result. For example, the third weight may be determined by using another reference signal. For example, after the network device may send the another reference signal through different beams (or by using different weights), the terminal device may feed back a plurality of pieces of signal quality information based on the different beams. Correspondingly, the network device may determine the third weight based on signal quality information indicating optimal signal quality in the plurality of pieces of signal quality information, or the network device may determine the third weight based on signal quality information greater than a threshold in the plurality of pieces of signal quality information, or the network device may determine the third weight based on quality (for example, an RSRP) of one or more reference signals fed back by the terminal.

Optionally, the dimension of the first weight is the same as the dimension of the third weight, that is, the weight of each of the N₁ antenna element sets can be determined based on the first weight used to send the reference signal.

The N₁ virtual ports included in the first digital port are used as an example. In a k^{th} time unit in the L₁ (L₁=N₁) time units, a k^{th} second weight ${w}_{k}^{′}$ in the L₁ second weights may be represented as: ${w}_{k}^{′} = \left[{w}_{1 , k} {w}_{2 , k} ⋯ {w}_{N , k}\right] ′$ ${w}_{k}^{′}$ is a vector of N₁×1, and corresponds to phase information of N₁ virtual subarrays in the k^{th} time unit. As described above, the reference signal sent through the first digital port may be carried in the L₁(L₁ = N₁) time units, and the N₁ second weights corresponding to the L₁ time units may be represented as: $W = \left[{w}_{1}^{′} {w}_{2}^{′} ⋯ {w}_{{L}_{1}}^{′}\right]$
${w}_{1}^{′} {w}_{2}^{′} ⋯ {w}_{{L}_{1}}^{′}$ represent the L₁ (L₁ = N₁) second weights of the L₁ time units respectively, and the L₁ (L₁ = N₁) second weights are orthogonal to each other.

For example, the matrix W may be a DFT matrix or a Hadamard (Hadamard) matrix. For example, columns of the matrix W represent different time units (that is, the matrix W includes L₁ columns), and rows represent different virtual ports included in one digital port (that is, the matrix W includes N₁ rows). The DFT matrix is used as an example. The matrix W satisfies: $W = \left[\begin{matrix}1 & 1 & 1 & ⋯ & 1 \\ 1 & ω & {ω}^{2} & ⋯ & {ω}^{N - 1} \\ 1 & {ω}^{2} & {ω}^{4} & ⋯ & {ω}^{2 \left(N-1\right)} \\ ⋮ & ⋮ & ⋮ & ⋯ & ⋯ \\ 1 & {ω}^{N - 1} & ⋯ & ⋯ & {ω}^{\left(N-1\right) \left(N-1\right)}\end{matrix}\right]$

Each element *w_{x,y}* in the matrix W represents phase information of a virtual subarray y on a symbol x (that is, x is a matrix column index, and y is a matrix row index), where $ω = {e}^{\frac{- 2 πj}{{N}_{1}}}$, e is a natural constant, j is a symbol for an imaginary number, and N₁ is a quantity of virtual ports.

Certainly, the Hadamard matrix may alternatively be used. For example, a first-order Hadamard matrix may be represented as H₁ = [1].

A second-order Hadamard matrix may be represented as ${H}_{2} = \left[\begin{matrix}1 & 1 \\ 1 & - 1\end{matrix}\right]$.

A fourth-order Hadamard matrix may be represented as ${H}_{4} = \left[\begin{matrix}1 & 1 & 1 & 1 \\ 1 & - 1 & 1 & - 1 \\ 1 & 1 & - 1 & - 1 \\ 1 & - 1 & - 1 & 1\end{matrix}\right]$.

An n^{th}-order Hadamard matrix is Hₙ = H₂ ⊗ H_{2z-1}, where n is 2 to the power of z, and z is a positive integer.

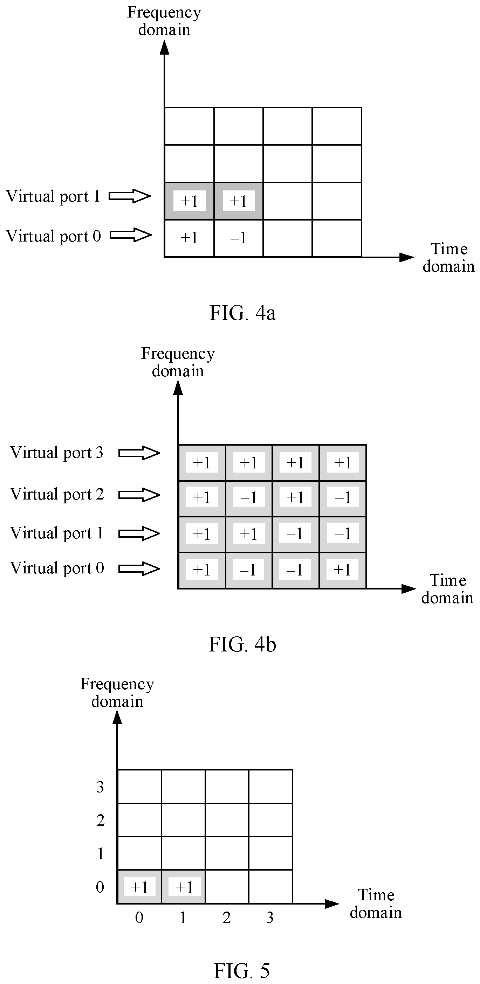

As shown in FIG. 4a, in an application example, assuming that the first digital port is split into two virtual ports, that is, the first digital port includes two (that is, N₁=2) virtual ports, two (that is, L₁ = N₁=2) time units are needed for sending. In this case, second weights of the two virtual ports in the two time units are [+1 +1] and [+1 -1] respectively. As shown in FIG. 5,
in a time domain unit 1, the second weights of the two virtual ports are +1 and +1 respectively; and
in a time domain unit 2, the second weights of the two virtual ports are +1 and -1 respectively.

As shown in FIG. 4b, in another application example, assuming that the first digital port is split into four virtual ports, that is, the first digital port includes four (that is, N₁=4) virtual ports, four (that is, L₁ = N₁=4) time units are needed for sending. In this case, second weights of the four virtual ports in the four time units may be [+1 +1 +1 +1], [+1 -1 +1 -1], [+1 +1 -1 -1], and [+1 -1 -1 +1] respectively, or may be [+1 +1 +1 +1], [+1 -j +1 +j], [-1 +1 -1 +1], and [+1 -j -1 +j] respectively.

The Hadamard matrix is used as an example.

In a time domain unit 1, the second weights of the four virtual ports are +1, +1, +1, and +1 respectively;
in a time domain unit 2, the second weights of the four virtual ports are +1, -1, +1, and -1 respectively;
in a time domain unit 3, the second weights of the four virtual ports are +1, +1, -1, and -1 respectively; and
in a time domain unit 4, the second weights of the four virtual ports are +1, -1, -1, and +1 respectively.

It should be understood that, that the L₁ second weights are orthogonal may be understood as that any two of the L₁ second weights are orthogonal to each other, or different second weights in the L₁ second weights are orthogonal to each other. For example, in FIG. 4a, the L₁ second weights include the second weights "+1 and +1" in the time domain unit 1 and the second weights "+1 and -1" in the time domain unit 2, and the two (that is, L₁=2) second weights are orthogonal to each other. For another example, in the Hadamard matrix, the L₁ second weights include the second weights "+1, +1, +1, and +1" in the time domain unit 1, the second weights "+1, -1, +1, -1" in the time domain unit 2, the second weights "+1, +1, -1, -1" in the time domain unit 3, and the second weights "+1, -1, -1, +1" in the time domain unit 4, and the four (that is, L₁=4) second weights are pairwise orthogonal.

Optionally, if M is greater than 1, phase information of each virtual port included in each of the M digital ports may be independently configured, or phase information of a same virtual subarray may be configured for the M digital ports.

Based on the technical solution shown in FIG. 3, after the network device sends the reference signal in step S301, because the reference signal is transmitted through a wireless channel, the reference signal received by the terminal device can carry channel information of the wireless channel. Then, the measurement information obtained by the terminal device by measuring the reference signal can reflect the channel information. A manner in which the terminal device subsequently sends the measurement information in step S302 enables the network device to obtain a measurement result of a channel between the network device and the terminal device based on the measurement information.

In addition, the reference signal received by the terminal device in step S301 is sent in the L₁ time units by using the L₁ first weights respectively, the i^{th} first weight in the L₁ first weights is obtained by using the i^{th} second weight in the L₁ second weights and the third weight, and the L₁ second weights are orthogonal. In other words, the reference signal transmitted in the L₁ time units is sent by using the L₁ mutually orthogonal second weights. In this manner, the terminal device measures, relatively independently, a reference signal carried in different time units, and further obtains L₁ pieces of relatively independent channel information, to obtain measurement information with higher accuracy.

It can be learned from the foregoing implementation process that in step S301, the reference signal may be sent through the M digital ports, and a value of M may be set in a plurality of manners. The following provides descriptions with reference to some implementation examples.

Example 1: The value of M is 1.

In the example 1, when the value of M is 1, the reference signal may be sent through a digital port (that is, the first digital port). Therefore, the solution is applicable to a scenario in which the network device is configured with a single digital port, to implement transmission and measurement of the reference signal of virtual ports included in the single digital port.

As described above, when the value of M is 1, the M digital ports are the first digital port. In addition, the first digital port includes the N₁ virtual ports, and the reference signal sent through the first digital port is sent in the L₁ time units by using the L₁ first weights respectively. For example, N₁ and L₁ are equal.

Optionally, the L₁ time units are consecutive in time domain.

Optionally, when the L₁ time units are L₁ symbols, a specific time domain symbol position occupied by the L₁ symbols in one slot may be configured by the network device (for example, the configuration information of the reference signal described above), for example, a start position of the L₁ symbols is configured, and a value of L₁ is configured.

Optionally, in the L₁ time units, quantities of frequency domain resources occupied in different time units may be the same.

In an implementation example of the example 1, as shown in FIG. 5, an example in which the first digital port includes two (that is, N₁=2) virtual ports is used. A resource for sending a reference signal through the first digital port may include two REs in FIG. 5. In other words, the two REs include two (that is, L₁ =2) symbols in time domain, and include one subcarrier in frequency domain. In the example shown in FIG. 5, the reference signal is sent on the two symbols through the first digital port. It should be understood that code sequence encoding on a 1^{st} symbol and a 2^{nd} symbol in FIG. 5 may be both "+1", and code sequence encoding of all 1s is used for sending, that is, no code division multiplexing of a digital port.

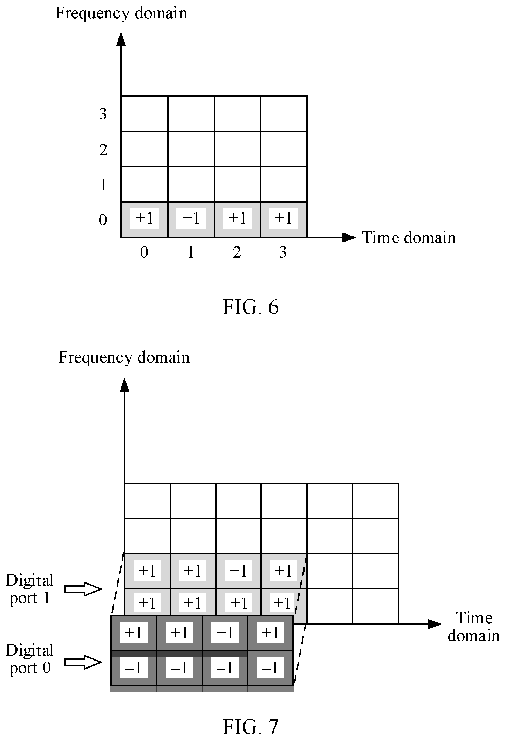

In another implementation example of the example 1, as shown in FIG. 6, an example in which the first digital port includes four (that is, N₁=4) virtual ports is used. A resource for sending a reference signal through the first digital port may include four REs in FIG. 6. In other words, the four REs include four (that is, L₁ =4) symbols in time domain, and include one subcarrier in frequency domain. In the example shown in FIG. 6, the reference signal is sent on the four symbols through the first digital port. It should be understood that in FIG. 6, code sequence encoding on different symbols in the four symbols may be all "+1", and code sequence encoding of all 1s is used for sending, that is, no code division multiplexing of a digital port.

Optionally, a plurality of time units for sending the reference signal through the first digital port may be in a same slot. For example, the two symbols in FIG. 5 and the four symbols in FIG. 5 may be in a same slot. Similarly, a plurality of resources for sending the reference signal through the first digital port may be in a same physical resource block (physical resource block, PRB). For example, the two REs in FIG. 5 and the four REs in FIG. 5 may be in a same PRB. In addition, for the reference signal transmitted in step S201, the reference signal may be carried in one or more slots (or one or more PRBs), and resource mapping manners of different slots (or different PRBs) may be the same.

Optionally, the plurality of time units for sending the reference signal through the first digital port, and/or the plurality of resources for sending the reference signal through the first digital port may be sent by using configuration information of the network device, for example, may be configured by using a configuration that is of the reference signal and that is sent by the network device.

Example 2: The value of M is greater than 1.

In the example 2, when the value of M is greater than 1, the reference signal may be sent through two or more digital ports (that is, the first digital port and another digital port). Therefore, the solution is applicable to a scenario in which the network device is configured with two or more digital ports, to implement transmission and measurement of the reference signal of virtual ports included in the two or more digital ports.

In the example 2, in addition to the first digital port, the M digital ports may further include another digital port, for example, a second digital port. The second digital port includes N₂ virtual ports; and the reference signal is sent in L₂ time units by using L₂ fourth weights respectively, L₂ is an integer greater than 1, a j^{th} fourth weight in the L₂ fourth weights is obtained by using a j^{th} fifth weight in L₂ fifth weights and a sixth weight, and the L₂ fifth weights are orthogonal. In other words, the reference signal transmitted in the L₂ time units is sent by using the L₂ mutually orthogonal fifth weights. In this manner, the terminal device measures, relatively independently, a reference signal carried in different time units, and further obtains L₁ pieces of relatively independent channel information, to obtain measurement information with higher accuracy.

Optionally, L₁ and L₂ are equal. The L₁ time units and the L₂ time units may be same time units, that is, a time domain resource used by the first digital port in the M digital ports to send the reference signal may be the same as a time domain resource used by the second digital port to send the reference signal. In this manner, the same time units can be reused as much as possible, to save communication resources and reduce implementation complexity.

Optionally, L₁ and L₂ are equal. The L₁ time units and the L₂ time units may be same frequency domain units, that is, a frequency domain resource used by the first digital port in the M digital ports to send the reference signal may be the same as a frequency domain resource used by the second digital port to send the reference signal. In this manner, the same frequency domain units can be reused as much as possible, to save communication resources and reduce implementation complexity.

Optionally, N₁ and N₂ are equal. To be specific, a quantity of virtual ports included in the first digital port in the M digital ports may be the same as a quantity of virtual ports included in the second digital port. In this manner, implementation complexity can be reduced.

It should be noted that for an implementation process of the second digital port, refer to the foregoing implementation process of the first digital port. For example, for a correspondence between the L₂ time units and the L₂ fourth weights, refer to the correspondence between the L₁ time units and the L₁ first weights, and for a correspondence between the L₂ fourth weights and the L₂ fifth weights, refer to the correspondence between the L₁ first weights and the L₁ second weights.

In addition, in the example 2, when M is greater than 1, the resource of the reference signal may be implemented in a plurality of manners. For example, the resource of the reference signal satisfies one of the following manner 1 to manner 3. The following describes these manners by using examples.

Manner 1: In the resource of the reference signal, time domain resources and frequency domain resources used by different digital ports in the M digital ports to send the reference signal are the same, the different digital ports in the M digital ports are code division multiplexed, and the digital ports are distinguished by using orthogonal codes. In other words, in the manner 1, the M digital ports may share a time-frequency resource, and frequency domain code division (that is, FD-CDM#M) is used for the M digital ports, which may indicate that there are M digital ports in one CDM group.

Optionally, for any digital port in the M digital ports, a quantity of virtual ports included in the any digital port may be equal to a quantity of time units occupied by the any digital port (for example, L₁ and N₁ are equal, and L₂ and N₂ are equal).

In an implementation example of the method 1, as shown in FIG. 7, an example in which each of the first digital port and the second digital port includes four (that is, N₁ = N₂=4) virtual ports is used. A resource for sending a reference signal through the first digital port may include eight REs corresponding to a "digital port 0" in FIG. 7, and a resource for sending a reference signal through the second digital port may include eight REs corresponding to a "digital port 1" in FIG. 7. In other words, the eight REs include four (L₁=4) symbols in time domain, and include two subcarriers in frequency domain. In the example shown in FIG. 7, on the four symbols, an orthogonal cover code (orthogonal cover code, OCC) code of code sequence encoding corresponding to the digital port 0 is "+1" and "-1", and an OCC code of code sequence encoding corresponding to the digital port 1 is "+1" and "+1". That is, two OCCs correspond to two digital ports. The code division multiplexing is referred to as FD-CDM2 due to an orthogonal OCC code of two REs in frequency domain.

It may be understood that for an implementation process of an orthogonal code between different digital ports, refer to the foregoing Table 1 and the descriptions of related implementation examples.

Manner 2: In the resource of the reference signal, time domain resources used by different digital ports in the M digital ports to send the reference signal are the same, frequency domain resources used by the different digital ports in the M digital ports to send the reference signal are different, and the different digital ports in the M digital ports are not code division multiplexed (no-CDM). In other words, frequency division is performed on resources of the different digital ports in the M digital ports, and the digital ports are distinguished in a frequency division manner.

In a possible implementation of the manner 2, in the resource of the reference signal, resources used by different digital ports in the M digital ports to send the reference signal include M different frequency domain units in frequency domain. Specifically, M is greater than 1. When the frequency domain resources used by the different digital ports in the M digital ports to send the reference signal are different, and the different digital ports in the M digital ports are not code division multiplexed, the resources used by the different digital ports to send the reference signal include the M different frequency domain units in frequency domain. In this manner, in a case of no code division multiplexing, different digital ports can be used to send the reference signal on different frequency domain resources, so that flexibility of implementing the solution can be improved. The frequency domain unit may include one or more subcarriers or REs.

Optionally, the method further includes: The terminal device receives indication information indicating the M different frequency domain units, so that the terminal device determines a resource position of each frequency domain unit based on the indication information. Optionally, the indication information is carried in configuration information of the reference signal, other messages/information/signaling, or the like. This is not limited herein. For example, the configuration information may be used to configure a start RE position of each digital port in frequency domain, and different digital ports may occupy different frequency domain resources.

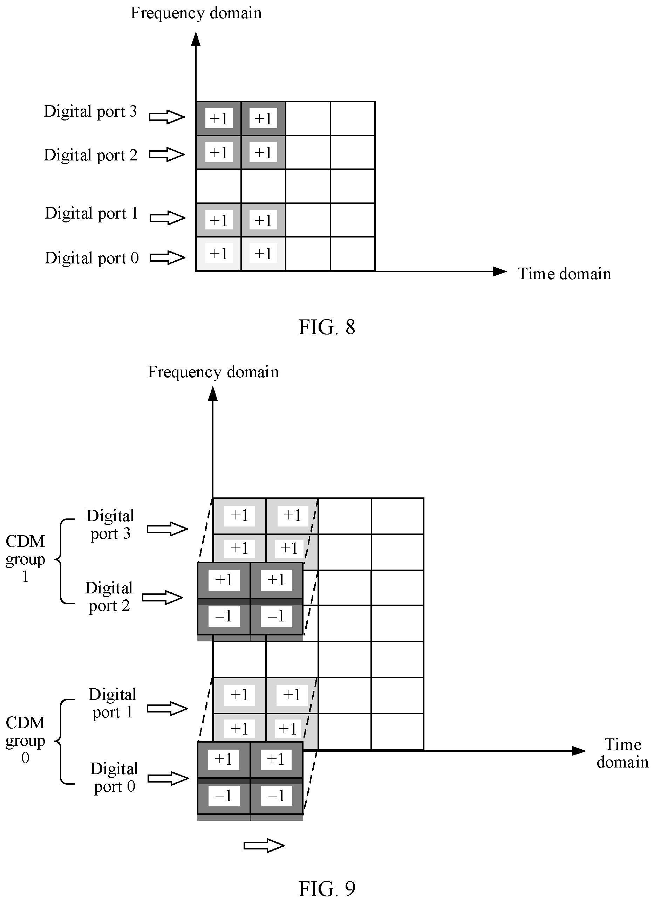

In an implementation example of the manner 2, as shown in FIG. 8, an example in which the M digital ports include four digital ports: a digital port 0, a digital port 1, a digital port 2, and a digital port 3 in the figure is used. The first digital port and the second digital port may be any two different digital ports in the four digital ports. In this example, assuming that each digital port includes two virtual ports and a quantity of time domain units is the same as a quantity of virtual ports, each digital port occupies two REs in time domain. In addition, assuming that each digital port occupies one RE in frequency domain, each digital port occupies two REs in total, and four digital ports may sequentially occupy 1^{st}, 2^{nd}, 4^{th}, and 5^{th} frequency domain REs in one resource block (resource block, RB). In the example shown in FIG. 8, different digital ports in the M digital ports are not code division multiplexed (no-CDM) (or in other words, code division multiplexing is not used).

Optionally, for a same digital port, several virtual ports included in the same digital port occupy a same frequency domain resource in different time units. In this manner, implementation complexity can be reduced.

Optionally, for different digital ports in the M digital ports, quantities of virtual ports in the different digital ports may be the same.

Manner 3: In the resource of the reference signal, the M digital ports belong to Q groups of digital ports, each group of digital ports includes one or more digital ports, Q is a positive integer, frequency domain resources used by different groups of digital ports in the Q groups of digital ports to send the reference signal are different, frequency domain resources used by one or more digital ports included in a same group of digital ports in the Q groups of digital ports to send the reference signal are the same, and the one or more digital ports included in the same group of digital ports are code division multiplexed. Optionally, a code division multiplexing type of the one or more digital ports included in the same group of digital ports is frequency domain code division multiplexing.

In a possible implementation of the manner 3, in the resource of the reference signal, resources used by different digital ports in the M digital ports to send the reference signal include same M frequency domain units in frequency domain. Specifically, M is greater than 1. When the time domain resources and frequency domain resources used by the different digital ports in the M digital ports to send the reference signal are the same, and the different digital ports are code division multiplexed, the resources used by the different digital ports to send the reference signal include the same M frequency domain units in frequency domain. In this manner, the different digital ports can be used to send the reference signal on the same frequency domain units in a code division multiplexing manner, and the same frequency domain units can be reused as much as possible, to save communication resources and reduce implementation complexity.

In an implementation example of the manner 3, as shown in FIG. 9, an example in which the M digital ports include four digital ports: a digital port 0, a digital port 1, a digital port 2, and a digital port 3 in the figure is used. The first digital port and the second digital port may be any two different digital ports in the four digital ports. In this example, the M digital ports are mapped to measurement resources in ascending order of OCC sequence indexes in a CDM group and then in ascending order of indexes of CDM groups. It is assumed that two CDM groups are configured, and each CDM group includes M/2 digital ports. To be specific, digital ports 0 to M/2-1 belong to a 1^{st} CDM group (that is, a CDM group 0 that includes a digital port 0 and a digital port 1 in the figure), and digital ports M/2 to M belong to a 2^{nd} CDM group (that is, a CDM group 1 that includes a digital port 2 and a digital port 3 in the figure).

In addition, in this example, the digital port 0 and the digital port 1 occupy a same time-frequency resource and belong to the CDM group 0, and the two digital ports are frequency domain code division multiplexed FD-CDM2; the digital port 2 and the digital port 3 occupy a same time-frequency resource and belong to the CDM group 1, and the two digital ports are frequency domain code division multiplexed FD-CDM2; and resource frequency division is performed on the digital ports 0 and 1 and the digital ports 2 and 3, which occupy different frequency domain resources. Each digital port includes two virtual ports, and occupies two time domain symbols, and each digital port occupies two REs in frequency domain.

It may be understood that in the example shown in FIG. 9, on two symbols, different digital ports in a same CDM group may be code division multiplexed on a same symbol. For example, on a 1^{st} symbol, in CDM 0, an OCC code of code sequence encoding corresponding to the digital port 0 is "+1" and "-1", and an OCC code of code sequence encoding corresponding to the digital port 1 is "+1" and "+1"; and in CDM 1, an OCC code of code sequence encoding corresponding to the digital port 2 is "+1" and "-1", and an OCC code of code sequence encoding corresponding to the digital port 3 is "+1" and "+1".

Optionally, in the example 2, when M is greater than 1, the method further includes: The terminal device receives indication information indicating that the resource of the reference signal satisfies one of the foregoing method 1 to method 3. In this manner, the terminal device can determine, based on the indication information, resource configuration manners of different digital ports in the M digital ports.

Optionally, the indication information is carried in configuration information of the reference signal, other messages/information/signaling, or the like. This is not limited herein. Alternatively, the terminal device determines, in a preconfiguration manner, that the resource of the reference signal satisfies one of the foregoing method 1 to method 3.

A communication process between the network device and the terminal device shown in FIG. 2 is used as an example. To obtain channel information between the network device and the terminal device, a common method is as follows: The network device sends a downlink reference signal, and the terminal device feeds back corresponding channel state information based on the downlink reference signal, including precoding information, a quantity of transmission streams supported by a channel (that is, an RI), and a CQI (used to feed back an MCS recommended by the terminal under current channel quality). This process is referred to as channel state information feedback (CSI feedback). Usually, for different beams, the network device independently sends a reference signal on each beam, and the terminal device measures the reference signal corresponding to each beam and feeds back a measurement result of each beam. Specifically, the network device configures a plurality of resources for the terminal, each resource corresponds to one transmit beam of the network device, and the terminal device feeds back a beam measurement result.

With development of communication technologies, to improve a coverage capability of a communication signal (for example, a millimeter-wave signal), a scale of an antenna array used to receive and send the communication signal becomes larger, and a quantity of beams also increases accordingly. In one aspect, an increase in a quantity of symbols for beam sweeping causes an increase in beam sweeping overheads. In another aspect, an increase in an array causes a narrower beam, which poses a greater challenge to terminal mobility.

To resolve this problem, in the technical solution shown in FIG. 3, the reference signal received by the terminal device in step S301 is sent in the L₁ time units by using the L₁ first weights respectively, the i^{th} first weight in the L₁ first weights is obtained by using the i^{th} second weight in the L₁ second weights and the third weight, and the L₁ second weights are orthogonal. In other words, the reference signal is sent at different time by using orthogonal weights. Therefore, the terminal device may obtain a beam channel of a subarray based on inversion, and then obtain an optimal weight of the virtual port by calculating a criterion (for example, a power maximization criterion or a capacity maximization criterion). Then, the measurement information sent by the terminal device in step S302 may be used to determine the weight. In this manner, when the scale of the antenna array is large, beam sweeping overheads can be reduced, and quick beam tracking can be implemented.

For example, it is assumed that the first digital port includes two (that is, N₁=2) virtual ports, and the two virtual ports correspond to an antenna element set 0 and an antenna element set 1 in the network device respectively. It is assumed that the third weight corresponds to two sub-vectors: ***w***₀ and ***w***₁, and both ***w***₀ and ***w***₁ are column vectors, and a formed vector $\left[\begin{matrix}{w}_{0} \\ {w}_{1}\end{matrix}\right]$ is the third weight. It is also assumed that channel information between the antenna element set 0 and the terminal device and channel information between the antenna element set l and the terminal device are represented as ***H***₀ and ***H***₁ respectively. In step S301, the network device may send the reference signal based on the two virtual ports in the two (that is, L₁=2) time units. The following uses an example in which the two time units are a time unit 0 and a time unit 1 respectively for description.

For the time unit 0, phase adjustment of s₀₀ and s₁₀ is performed on the virtual port 0 and the virtual port 1 respectively, and s₀₀ and s₁₀ may form a second weight in the L₁ second weights. In this case, a first weight in the L₁ first weights may be represented as $\left[\begin{matrix}{s}_{00} {w}_{0} \\ {s}_{10} {w}_{1}\end{matrix}\right]$, and a signal ***G***₀ received and obtained by the terminal device in the time unit 0 satisfies: ${G}_{0} = \left[{H}_{0} {H}_{1}\right] \left[\begin{matrix}{s}_{00} {w}_{0} \\ {s}_{10} {w}_{1}\end{matrix}\right] = \left[{H}_{0}{w}_{0} {H}_{1}{w}_{1}\right] \left[\begin{matrix}{s}_{00} \\ {s}_{10}\end{matrix}\right]$

For the time unit 1, phase adjustment of s₀₁ and s₁₁ is performed on the virtual port 0 and the virtual port 1 respectively, and s₀₁ and s₁₁ may form another second weight in the L₁ second weights. In this case, another first weight in the L₁ first weights may be represented as $\left[\begin{matrix}{s}_{01} {w}_{0} \\ {s}_{11} {w}_{1}\end{matrix}\right]$, and a signal ***G***₁ received and obtained by the terminal in the time unit 1 satisfies: ${G}_{0} = \left[{H}_{0} {H}_{1}\right] \left[\begin{matrix}{s}_{01} {w}_{0} \\ {s}_{11} {w}_{1}\end{matrix}\right] = \left[{H}_{0}{w}_{0} {H}_{1}{w}_{1}\right] \left[\begin{matrix}{s}_{01} \\ {s}_{11}\end{matrix}\right]$

***G***₀ and ***G***₁ are combined to obtain: $\left[{H}_{0}{w}_{0} {H}_{1}{w}_{1}\right] \left[\begin{matrix}{s}_{00} & {s}_{01} \\ {s}_{10} & {s}_{11}\end{matrix}\right] = \left[{G}_{0} {G}_{1}\right]$

A phase adjustment matrix $\left[\begin{matrix}{s}_{00} & {s}_{01} \\ {s}_{10} & {s}_{11}\end{matrix}\right]$ includes the L₁ orthogonal first weights, and therefore is invertible. In this case, based on the received signal in the L₁ time units and the L₁ orthogonal first weights, the terminal may obtain: $\left[{H}_{0}{w}_{0} {H}_{1}{w}_{1}\right] = \left[{G}_{0} {G}_{1}\right] {\left[\begin{matrix}{s}_{00} & {s}_{01} \\ {s}_{10} & {s}_{11}\end{matrix}\right]}^{- 1}$

The power maximization criterion is used as an example (similarly, for the capacity maximization criterion or another criterion, refer to the following implementation). If a signal power obtained by the terminal device needs to be maximized, an optimal second weight may be obtained according to the following principle: $\left\{\begin{matrix}{max}_{α} {\left‖\left[{H}_{0}{w}_{0} {H}_{1}{w}_{1}\right]α\right‖}_{2}^{2} \\ \left|{α}_{i}\right| = 1\end{matrix}\right.$

According to the foregoing principle, in an implementation, the optimal second weight may be obtained through SVD decomposition.

A covariance matrix R of [**H**₀***w***₀ **H**₁***w***₁] is obtained first, and satisfies: $R = {\left[{H}_{0}{w}_{0} {H}_{1}{w}_{1}\right]}^{H} \left[{H}_{0}{w}_{0} {H}_{1}{w}_{1}\right]$

Then, SVD decomposition is performed on R, and a right singular vector ***ν*** corresponding to a maximum singular value is obtained, to further obtain ***α***: ${α}_{i} = \frac{{v}_{i}}{\left|{v}_{i}\right|}$

In the foregoing implementation process, if the terminal sends ***α*** or [**H**₀***w***₀ **H**₁***w***₁] to the network device, the network device may obtain *a*₀ corresponding to the antenna element set 0 and *a*₁ corresponding to the antenna element set 1. Further, when data transmission (for example, data sending or data receiving) is performed, analog weights of the antenna element set 0 and the antenna element set 1 in the network device may be *α*₀***w***₀ and *α*₁***w***₁*.* In this manner, compared with an implementation process in which the network device obtains weights of antenna element sets in a data transmission process by using a plurality of beam sweeping processes with different accuracy, because the network device can obtain analog weights of different antenna element sets without using the plurality of beam sweeping processes with different accuracy, beam sweeping overheads can be reduced, and a beam sweeping delay can be reduced, to implement quick beam tracking.

In other words, the measurement information sent by the terminal device in step S302 may be used to determine an analog weight (for example, *α*₀***w***₀ and *α*₁***w***₁) of an antenna element set in the network device. The following describes a specific implementation process of the measurement information.

In a possible implementation, the measurement information sent by the terminal device in step S302 includes first information obtained by performing measurement based on a reference signal sent through the first digital port, where the first information is N₁ pieces of channel information, that is, channel information of the N₁ virtual ports. It may be understood that it can be learned from the foregoing descriptions that after the terminal device receives the reference signal, the terminal device may determine the N₁ pieces of channel information by using reference signals sent through the N₁ virtual ports.

In an implementation example of the N₁ pieces of channel information, as shown in the foregoing example, when the terminal device receives and obtains the signal G₀ in the time unit 0 and the terminal device receives and obtains the signal G₁ in the time unit 1, the signal G₀ and the signal G₁ satisfy: $\left[{H}_{0}{w}_{0} {H}_{1}{w}_{1}\right] = \left[{G}_{0} {G}_{1}\right] {\left[\begin{matrix}{s}_{00} & {s}_{01} \\ {s}_{10} & {s}_{11}\end{matrix}\right]}^{- 1}$

Correspondingly, the N₁ pieces of channel information corresponding to the two (that is, N₁ =2) virtual ports respectively may be represented as channel information H₀w₀ of the virtual port 0 (that is, the antenna element set 0) and channel information ***H***₁***w***₁ of the virtual port 1 (that is, the antenna element set 1). When the first information includes N₁ pieces of channel information, the first information may include quantization feedback values of the N₁ pieces of channel information (that is, [H₀w₀ H₁w₁]), or the first information may include a PMI obtained based on the N₁ pieces of channel information (that is, [H₀w₀ H₁w₁]). In this possible implementation, optionally, the network device may determine ***α*** based on the received N₁ pieces of channel information corresponding to the N₁ virtual ports respectively and a criterion such as the power maximization criterion or the capacity maximization criterion, to determine weights of the N₁ virtual ports.

In another possible implementation, the measurement information sent by the terminal device in step S302 includes first information obtained by performing measurement based on a reference signal sent through the first digital port, the first information is determined based on N₁ pieces of channel information, the N₁ pieces of channel information are determined respectively by using reference signals sent through the N₁ virtual ports, and the first information is used to determine weights of the N₁ virtual ports in the first digital port. In this manner, after the terminal device measures the reference signal carried in the L₁ time units to obtain a measurement result, the terminal device can determine a better (or an optimal) weight of a virtual port in the first digital port based on the measurement result, and indicate the weight by using the first information. Subsequently, the network device can communicate with the terminal device based on the weight.

Therefore, when a scale of an antenna array is large, in a manner in which the network device sends a reference signal (usually, a reference signal sent based on different weights may be understood as a reference signal sent based on different beams) in different time units based on orthogonal second weights, the terminal device may determine and indicate a better (or an optimal) weight based on a measurement result of the different time units, so that the network device can perform communication based on the weight, to reduce beam sweeping overheads and implement quick beam tracking.

Optionally, after the terminal device measures the reference signal carried in the L₁ time units to obtain a measurement result, the terminal device can determine, based on the measurement result and a mathematical method, a better (or an optimal) weight of a virtual port in the first digital port. For example, the mathematical method may include a power maximization criterion, a capacity maximization criterion, and the like. For example, when the network device sends data, if data transmission is performed with reference to the foregoing reference signal, the weights of the N₁ virtual ports may be determined by using the first information fed back by the terminal device.

In a possible implementation, the weights of the N₁ virtual ports in the first digital port are obtained by using a first weight vector, and the first weight vector includes N₁ elements; and the N₁ virtual ports correspond to the N₁ antenna element sets respectively, each antenna element set includes one or more antenna elements, and the N₁ elements are used to adjust the phases of the N₁ antenna element sets respectively. In other words, in a manner of adjusting a phase of an antenna element, the reference signal can be sent on different virtual ports.

It may be understood that the first weight vector includes the N₁ elements, and the second weight described above includes the N₁ elements corresponding to the N₁ virtual ports. For an implementation process of the first weight vector, refer to the foregoing implementation process of the second weight.

In a possible implementation, that the weights of the N₁ virtual ports in the first digital port are obtained by using the first weight vector includes: the weights of the N₁ virtual ports in the first digital port are obtained by using the first weight vector and a second weight vector, and the second weight vector includes N₁ sub-vectors; and a dimension of a T^{th} sub-vector in the N₁ sub-vectors is the same as a quantity of antenna elements in a T^{th} antenna element set in the N₁ antenna element sets, and a value of T ranges from 1 to N₁. In this manner, the first weight vector can correspond to a weight of each of the N₁ antenna element sets.

It may be understood that the second weight vector includes the N₁ sub-vectors, and the third weight described above includes the N₁ sub-vectors. For an implementation process of the second weight vector, refer to the foregoing implementation process of the third weight.

In an implementation example of the N₁ virtual ports, as described above, when N₁=2, virtual weights of the N₁ virtual ports (also referred to as the weights of the N₁ virtual ports) in the network device may be represented as *α*₀***w***₀ and *α*₁***w***₁. Correspondingly, in this example, the N₁ elements included in the first weight vector are *α*₀ and *α*₁ respectively, and the N₁ sub-vectors included in the second weight vector are *w*₀ and *w*₁ respectively.

In a possible implementation, the first information satisfies any one of the following manner A to manner D.

Manner A: The first information included in the measurement information sent by the terminal device in step S302 includes a quantization processing result of the first weight vector. In other words, after the terminal device determines the first weight vector, the terminal device directly quantizes the first weight vector and performs feedback. For example, the first weight vector includes the N₁ elements, and the terminal device quantizes phases of the N₁ elements, and feeds back a quantization result of the N₁ elements.

In an implementation example of the manner A, when a range of a feedback phase is 0 to 2π, and quantization accuracy is 0.1π, the feedback phase has 21 values (that is, a total of 21 values are 0, 0.1π, 0.2π, ..., and 2π). Correspondingly, in the N₁ elements, a feedback value of each element may occupy A (A is a positive integer) bits, and feedback of the phases of the N₁ elements occupies N₁ ∗ A bits. For example, a value of A is $\left⌈{log}_{2} 21\right⌉$ (indicating the ceiling of log₂21), or a value of A is 21, or a value of A is another value determined based on 21. This is not limited herein.

Optionally, the network device configures quantization accuracy of a phase corresponding to an element in the first weight vector. For example, the quantization accuracy is configured by using configuration information of the reference signal, or is configured by using other information/messages/signaling.

Manner B: The first information included in the measurement information sent by the terminal device in step S302 includes a quantization processing result corresponding to both one element in the N₁ elements corresponding to one virtual port in the N₁ virtual ports and differences of N₁-1 elements in the N₁ elements corresponding to N₁ - 1 virtual ports other than the one virtual port relative to the one element.

In an implementation example of the manner A, a range of a feedback phase is 0 to 2π, and quantization accuracy of a 1^{st} element is 0.1π. In this case, the feedback phase has 21 values, and A bits are needed for feedback of the 1^{st} element. Differences between remaining elements and the 1^{st} element are fed back, quantization accuracy of the element is 0.2π, and feedback of the remaining elements is performed. In this case, the feedback phase has 11 values, and B bits are needed for each element. In other words, a total of A+(N₁-1)B bits are used for feedback of the N₁ elements. For example, a value of A is $\left⌈{log}_{2} 21\right⌉$ and a value of B is $\left⌈{log}_{2} 11\right⌉$, or a value of A is 21 and a value of B is 11, or a value of A is another value determined based on 21 and a value of B is another value determined based on 11. This is not limited herein.

Manner C: The first information included in the measurement information sent by the terminal device in step S302 includes a first index and a second index, where the first index and the second index are used to determine the first weight vector of the first digital port from one or more weight vectors included in a codebook set. The first index is a codebook index in a first dimension, the second index is a codebook index in a second dimension, and in the one or more weight vectors included in the codebook set, each weight vector is determined by using a weight in the first dimension and a weight in the second dimension.

Manner D: The first information included in the measurement information sent by the terminal device in step S302 includes a third index, where the third index is used to determine the first weight vector of the first digital port from one or more weight vectors included in a codebook set.

It should be noted that the codebook set mentioned in the manner C and the manner D may be determined in a plurality of manners. The following provides descriptions with reference to some implementation examples.

Manner 1 of determining the codebook set: The codebook set is determined based on port information of a virtual port included in a digital port.

Specifically, port information of a virtual port in any digital port includes at least one of the following information A to information F:

Information A: an index of a port information combination, for example, an index value corresponding to each combination, each index value represents a combination of a virtual port splitting manner, an oversampling factor, and a quantity of virtual ports. The network device may indicate the index value, so that the terminal device can determine the virtual port split manner, the oversampling factor, the quantity of virtual ports, and the like. A value corresponding to the "index" is shown in Table 3 below. The virtual port splitting manner may be understood as a quantity of virtual ports in the first dimension and a quantity of virtual ports in the second dimension. The oversampling factor may be understood as an oversampling factor in the first dimension and an oversampling factor in the second dimension.

Information B: a quantity of virtual ports included in a digital port is N₁. For example, a quantity N of virtual ports in each digital port indicates that the network device splits a panel into N subarrays (an example in which the foregoing first digital port includes the N₁ virtual ports is used, and a panel of the first digital port is split to obtain N₁ subarrays, where the N₁ subarrays are the N₁ antenna element sets corresponding to the N₁ virtual ports, that is, each of the N₁ subarrays includes one or more antenna elements). Usually, N=M₁*M₂.

Information C: a quantity of virtual ports in the first dimension of the digital port is M₁. For example, a quantity M₁ of horizontal virtual ports in each digital port indicates that the network device horizontally splits a panel into M₁ subarrays, or may be understood as that each digital port includes M₁ virtual ports in the first dimension.

Information D: a quantity of virtual ports in the second dimension of the digital port is M₂. For example, a quantity M₂ of vertical virtual ports in each digital port indicates that the network device vertically splits a panel into M₂ subarrays, or may be understood as that each digital port includes M₂ virtual ports in the second dimension.

Information E: an oversampling factor in the first dimension of the digital port is O₁, for example, an oversampling factor O₁ in a horizontal dimension of each digital port, or may be understood as an oversampling factor in the first dimension of each digital port.

Information F: an oversampling factor in the second dimension of the digital port is O₂, for example, an oversampling factor O₂ in a vertical dimension of each digital port, or may be understood as an oversampling factor in the second dimension of each digital port.

Optionally, the information C may be determined based on the information B and the information D, that is, M₂ = N₁/M₁, and N₁ is divisible by M₁; or the information D may be determined based on the information B and the information C, that is, M₁ = N₁/M₂, and N₁ is divisible by M₂.

For example, the foregoing different combinations may be represented by parameters in different rows in Table 3 below.

**Table 3**

| Index | Quantity (N) of virtual ports | (M₁, M₂) | (O₁, O₂) |
|---|---|---|---|
| 0 | 2 | (2, 1) | (4, 1) |
| 1 | 4 | (4, 1) | (4, 1) |
| 2 | 4 | (2, 2) | (4, 4) |
| 3 | 8 | (4, 2) | (4, 4) |
| 4 | 8 | (8, 1) | (4, 1) |
| ... | ... | ... | ... |

Optionally, the terminal device does not need to sense a quantity of virtual ports in the first dimension and a quantity of virtual ports in the second dimension in a case of (M₁, M₂)=(N, 1) and (1, N), and may use a same index value. For example, in Table 3 above, (M₁, M₂)=(2, 1) or (1, 2) indicated by index=0 corresponds to a same codebook set, and therefore no differentiation is needed.

Therefore, an analog codebook set may be determined between the terminal device and the network device based on the port information of the virtual port in the any digital port. Specifically, M₁O₁ codebooks in the first dimension may be determined based on the quantity M₁ of virtual ports in the first dimension and the oversampling factor O₁ in the first dimension, where vₗ represents an l^{th} codebook (which is a vector whose length is M₁), a value range of 1 is 0 ~ M₁O₁, and all codebooks in the first dimension (that is, all vₗ) are denoted as Y₁; and M₂O₂ codebooks in the second dimension may be determined based on the quantity M₂ of virtual ports in the second dimension and the oversampling factor O₂ in the second dimension, where uₘ represents an m^{th} codebook (which is a vector whose length is M₂), a value range of m is 0 - M₂O₂, and all codebooks in the second dimension (that is, all uₘ) are denoted as Y₂. Finally, the codebook set is determined as Y. ${Y}_{1} = {v}_{l} = {\left[1 {e}^{\frac{j 2 πl}{M 1 O 1}} {e}^{\frac{j 2 π ∗ 2 l}{M 1 O 1}} … {e}^{\frac{j 2 π \left(M1-1\right) l}{M 1 O 1}}\right]}^{T}$ ${Y}_{2} = {u}_{m} = {\left[1 {e}^{\frac{j 2 πm}{M 2 O 2}} {e}^{\frac{j 2 π ∗ 2 m}{M 2 O 2}} … {e}^{\frac{j 2 π \left(M2-1\right) m}{M 2 O 2}}\right]}^{T}$ $Y = {Y}_{1} ⊗ {Y}_{2}$

In an implementation example, before step S302, the network device may send second information to the terminal device, where the second information may be used to determine port information of a virtual port included in the first digital port, and further determine, based on the port information, the codebook set used in the manner C or the manner D.

For example, the second information may include the port information (for example, at least one of the information A to the information F) of the virtual port included in the first digital port. Table 3 is used as an example. The second information may include one or more parameters in one row in Table 3.

For another example, the second information may include a fourth index, where the fourth index is used to determine, in preconfigured or predefined port information of one or more virtual ports, the port information of the virtual port included in the first digital port, and port information of each virtual port may include at least one of the information A to the information F. FIG. 3 is used as an example. The fourth index included in the second information may be an index in Table 3, so that the network device determines parameters in a row of Table 3 based on the index. Optionally, before the network device sends the fourth index to the terminal device, the network device sends port information of one or more virtual ports and a corresponding index, as shown in Table 3.

For another example, the second information may include a part of items in the information A to the information F, and other items in the information A to the information F are determined by using the part of items and the preconfigured or predefined port information of the one or more virtual ports. FIG. 3 is used as an example. The second information may indicate "(M₁, M₂)=(4, 1)". Correspondingly, the network device may determine, based on the second information, that the indication corresponds to a row of an index "1" in the table, and further determine "N=4" and "(O₁, O₂)=(4, 1)".

For another example, the second information may include a part of items in the information A to the information F, and other items in the information A to the information F are determined by using the part of items. For example, the second information includes the information B and the information D, and the information C may be determined based on the information B and the information D, that is, M₂ = N₁/M₁, and N₁ is divisible by M₁; or the second information includes the information B and the information C, and the information D may be determined based on the information B and the information C, that is, M₁ = N₁/M₁, and N₁ is divisible by M₂; or the second information includes the information C and the information D, and the information B may be determined based on the information C and the information D, that is, N₁ = M₁ ∗ M₂.

Optionally, the first digital port is one of the M digital ports. When M is greater than 1, port information of a corresponding virtual port may be configured or specified in a protocol for different digital ports in any one or more of the following manners:
① Port information of a corresponding virtual port is independently configured or specified for each digital port.
② A plurality of digital ports correspond to port information of one virtual port. Specially, a same virtual port splitting manner (a same quantity of virtual ports in the first dimension and a same quantity of virtual ports in the second dimension), a same oversampling factor (a same oversampling factor in the first dimension and a same oversampling factor in the second dimension), and a same quantity of virtual ports are used for each digital port.

In an example of the manner ① , the network device configures or dynamically indicates port information (that is, at least one of the information A to the information F) of a virtual port in each digital port for the terminal device. For example, the network device configures a measurement resource of one or more digital ports, and each digital port includes one or more virtual ports. The network device configures or dynamically indicates the port information of the virtual port in each digital port for the terminal device. The measurement resource may be an SSB, a CSI-RS, or the like. This is not limited herein.

In another example of the manner ①, the network device configures or dynamically indicates a part of items in the information A to the information F of each digital port for the terminal device, and other items in the information A to the information F are determined by using the part of items and/or preconfigured or predefined port information of one or more virtual ports.

In another example of the manner ①, the network device directly configures or indicates, for the terminal by using signaling, the fourth index corresponding to each digital port. The signaling may be one or more of RRC signaling, MAC CE signaling, DCI signaling, and the like, or may be other signaling. This is not limited herein.

In an example of the manner ②, the network device configures or the protocol specifies one or more digital port groups, each digital port group includes one or more digital ports, and one digital port group corresponds to same port information of a virtual port. The network device configures port information of one virtual port for each digital port group, and all digital ports in the digital port group have the same port information of the virtual port.

In another example of the manner ②, a network configures or the protocol specifies port information of one or more virtual ports, and the protocol specifies that port information of one virtual port is used for every k digital ports. For example, the network configures or the protocol specifies port information of two virtual ports, and there are eight digital ports in total. In this case, the protocol specifies that port information of a first virtual port is used for 0 to 3, and port information of a second virtual port is used for 4 to 7. Certainly, alternatively, the port information of the first virtual port may be used for 0, 2, 4, and 6, and the port information of the second virtual port may be used for 1, 3, 5, and 7. This is similar to a default rule.

For example, the network device configures or indicates M₁, M₂, O₁, and O₂ as 2, 2, 2, and 1 respectively in the foregoing manner. In this case, there are a total of four (M₁*M₂=N₁ =4) virtual ports, and a quantity of codebooks in a corresponding analog codebook set is 8=M₁*M₂*O₁*O₂=2*2*2*1.

Four codebooks in the horizontal direction (for example, the first dimension) exist, and satisfy: ${v}_{l} = {\left[1 {e}^{\frac{j 2 πl}{M 1 O 1}} {e}^{\frac{j 2 π ∗ 2 l}{M 1 O 1}} … {e}^{\frac{j 2 π \left(M1-1\right) l}{M 1 O 1}}\right]}^{T} = {\left[1 {e}^{\frac{j 2 πl}{4}}\right]}^{T} , where l = 0 , 1 , 2,3$

In other words, the four horizontal codebooks are respectively represented as: ${v}_{0} = {\left[1 1\right]}^{T}$ ${v}_{1} = {\left[1 j\right]}^{T}$ ${v}_{2} = {\left[1 -1\right]}^{T}$ ${v}_{3} = {\left[1 -j\right]}^{T}$

*Y*₁ is defined to include the four codebooks in the horizontal direction, and may be represented as: ${Y}_{1} = \left[{v}_{0} {v}_{1} {v}_{2} {v}_{3}\right] = \left[\begin{matrix}1 & 1 & 1 & 1 \\ 1 & j & - 1 & - j\end{matrix}\right]$

Two codebooks in the vertical direction (for example, the second dimension) exist, and satisfy: ${u}_{m} = {\left[1 {e}^{\frac{j 2 πm}{M 2 O 2}} {e}^{\frac{j 2 π ∗ 2 m}{M 2 O 2}} … {e}^{\frac{j 2 π \left(M2-1\right) m}{M 2 O 2}}\right]}^{T} = {\left[1 {e}^{\frac{j 2 πm}{2}}\right]}^{T} , where m = 0 , 1$

In other words, the two codebooks in the vertical direction are respectively represented as: ${u}_{0} = {\left[1 1\right]}^{T}$ ${u}_{1} = {\left[1 -1\right]}^{T}$

Y₂ is defined to include the two codebooks in the vertical direction, and may be represented as: ${Y}_{2} = \left[{u}_{0} {u}_{1}\right] = \left[\begin{matrix}1 & 1 \\ 1 & - 1\end{matrix}\right]$

That is, the codebook set may be represented as: $Y = {Y}_{1} ⊗ {Y}_{2} = \left[\begin{matrix}1 & 1 & 1 & 1 & 1 & 1 & 1 & 1 \\ 1 & - 1 & 1 & - 1 & 1 & - 1 & 1 & - 1 \\ 1 & 1 & j & j & - 1 & - 1 & - j & - j \\ 1 & - 1 & j & - j & - 1 & 1 & 1 & j\end{matrix}\right]$

Four rows of the matrix represent four virtual ports, and columns represent eight codebooks (that is, eight weight vectors).

In an example, if the terminal device performs feedback in the manner C through measurement, assuming that the terminal device determines, based on the power maximization criterion or the capacity maximization criterion, and feeds back the first index and the second index as 2 and 1 respectively by using the first information, correspondingly, the network device may determine, in the foregoing eight codebooks based on the index values "2 and 1" carried in the first information, that a 6^{th} weight vector is the first weight vector of the first digital port. In other words, horizontal and vertical weight vectors corresponding to the index values "2 and 1" are respectively: ${v}_{2} = {\left[1 -1\right]}^{T}$ ${u}_{1} = {\left[1 -1\right]}^{T}$

In this case, the network device determines that a final codebook is the first weight vector: ${Y}_{2 , 1} = {v}_{2} ⊗ {u}_{1} = {\left[1 -1 -1 1\right]}^{T}$

In the foregoing example, four elements *a*₀, *a*₁, *a*₂, *a*₃ included in the first weight vector corresponding to the four (that is, M₁*M₂ = N₁ =4) virtual ports satisfy: ${a}_{0} = 1 , {a}_{1} = - 1 , {a}_{2} = - 1 , {a}_{3} = 1$

In addition, when four sub-vectors included in the second weight vector corresponding to the four (that is, M₁*M₂=N₁ =4) virtual ports are respectively represented as *w*₀*, w*₁, *w*₂, *w*₃, analog weights *W* of the four virtual ports during data transmission may be respectively represented as: $W = \left[\begin{matrix}{a}_{0} {w}_{0} \\ {a}_{1} {w}_{1} \\ {a}_{2} {w}_{2} \\ {a}_{3} {w}_{3}\end{matrix}\right] = \left[\begin{matrix}{w}_{0} \\ - {w}_{1} \\ - {w}_{2} \\ {w}_{3}\end{matrix}\right]$

In another example, if the terminal device performs feedback in the manner D through measurement, and feeds back the third index, where the third index corresponds to one of eight codebooks, assuming that the terminal device determines, based on the power maximization criterion or the capacity maximization criterion, and feeds back the third index as 3 by using the first information (determines, in the eight codebooks, that a 4^{th} weight vector is the first weight vector of the first digital port), the network device determines that a final codebook is the first weight vector. $Y = {\left[1 -1 j -j\right]}^{T}$

In the foregoing example, four elements *a*₀, *a*₁, *a*₂, *a*₃ included in the first weight vector corresponding to the four (that is, M₁*M₂=N₁ =4) virtual ports satisfy: ${a}_{0} = 1 , {a}_{1} = - 1 , {a}_{2} = j , {a}_{3} = - j$

In addition, when four sub-vectors included in the second weight vector corresponding to the four (that is, M₁*M₂=N₁ =4) virtual ports are respectively represented as *w*₀*, w*₁, *w*₂, *w*₃, analog weights *W* of the four virtual ports during data transmission may be respectively represented as: $W = \left[\begin{matrix}{a}_{0} {w}_{0} \\ {a}_{1} {w}_{1} \\ {a}_{2} {w}_{2} \\ {a}_{3} {w}_{3}\end{matrix}\right] = \left[\begin{matrix}{w}_{0} \\ - {w}_{1} \\ j ∗ {w}_{2} \\ - j ∗ {w}_{3}\end{matrix}\right]$

Manner 2 of determining the codebook set: The codebook set used in the manner C or the manner D is determined from one or more codebook sets based on an indication of the network device.

In an implementation example, before step S302, the network device may send second information to the terminal device, where the second information may be used to determine, from one or more codebook sets, the codebook set used in the manner C or the manner D.

For example, the second information may include a fifth index, and the fifth index is used to determine the codebook set from one or more preconfigured or predefined codebook sets.

For another example, it can be learned from the foregoing example that in a process of determining the codebook set, one or more of the information A to the information F are associated. Correspondingly, a mapping relationship between "one or more of the information A to the information F" and "one or more codebook sets" may be preconfigured or predefined. Correspondingly, third information sent by the network device may indicate (for example, in Table 3) one or more of the information A to the information F. Subsequently, the terminal device may determine, based on one or more of the information A to the information F and the "mapping relationship", one of the one or more codebook sets as the codebook set used in the manner C or the manner D.

Optionally, the terminal device may determine the one or more codebook sets in a pre configuration or predefinition manner.

Optionally, the terminal device may receive signaling from the network device, and determine the one or more codebook sets by using the signaling. For example, the signaling may include one or more of RRC signaling, MAC CE signaling, DCI signaling, and the like.

It should be noted that the network device may indicate, in the one or more codebook sets in a plurality of manners, the codebook set used in the manner C or the manner D.

It can be learned from the foregoing implementation process that the first digital port is one of the M digital ports. When M is greater than 1, the measurement information sent by the terminal device in step S302 may be used to determine a weight (that is, a weight used for data transmission) of a virtual port included in each digital port. The following provides descriptions with reference to more implementation examples.

In a possible implementation, the measurement information includes any one of the following example A to example C:
Example A: M pieces of information;
Example B: K pieces of information; and
Example C: M pieces of information and K pieces of information.

The M pieces of information are used to determine a first weight vector of each of the M digital ports (for example, an i^{th} piece of information (a value of i ranges from 1 to M) in the M pieces of information is used to determine a first weight vector of an i^{th} digital port in the M digital ports, for another example, the M pieces of information are in one-to-one correspondence with the M digital ports). One of the M pieces of information is the first information. The K pieces of information are used to determine a first weight vector of each group of K groups of digital ports (for example, an i^{th} piece of information (a value of i ranges from 1 to K) in the K pieces of information is used to determine a first weight vector of a digital port included in an i^{th} group of digital ports in the K groups of digital ports, for another example, the K pieces of information are in one-to-one correspondence with the K groups of digital ports). Each group of the K groups of digital ports includes one or more of the M digital ports, K is a positive integer less than or equal to M, and one of the K pieces of information is the first information.

Specifically, the measurement information sent by the terminal device may include the M pieces of information and/or the K pieces of information. In this manner, the network device can determine the first weight vector of each of the M digital ports by using the M pieces of information and/or the K pieces of information.

In an implementation example, in the example B and the example C, in one or more digital ports included in each group of the K groups of digital ports, port information of virtual ports in different digital ports is the same. Specifically, when the measurement information includes K pieces of information, the K pieces of information are used to determine a first weight vector of a digital port included in each group of the K groups of digital ports, and each group of the K groups of digital ports includes one or more of the M digital ports. In addition, in one or more digital ports included in each group of the K groups of digital ports, port information of virtual ports in different digital ports is the same. In this manner, a feedback process of the measurement information can be simplified, and implementation complexity can be reduced.

In the example A, when the measurement information includes the M pieces of information, the first weight vector is independently fed back for different digital ports.

The network device configures the terminal device to independently feed back the first weight vector for each digital port. Optionally, the network device configures an order in which the terminal feeds back first weight vectors of different digital ports. Alternatively, it may be agreed that an order is used, for example, an ascending order or a descending order of digital port indexes is used. Alternatively, an order of first horizontal digital ports and then vertical digital ports, an order of first vertical digital ports and then horizontal digital ports, or the like is used.

In an implementation example, in the example B, when the measurement information includes the K pieces of information, a same first weight vector is fed back for a plurality of digital ports.

For example, the network device configures a quantity of groups of the digital ports (that is, configures a value of K). In other words, the network device configures one or more digital port groups, each digital port group includes one or more digital ports, and the network device configures feedback of a same first weight vector for each digital port group.

For another example, the network device configures a quantity of first weight vectors that need to be fed back (that is, configures a quantity of digital ports included in each group of the K groups digital ports). In other words, the terminal device may feed back a same first weight vector for every c (c is a positive integer, for example, c=M/K) digital ports.

For example, for eight digital ports (that is, digital ports 0 to 7) included in the network device, the network device configures a quantity of groups of the digital ports as 2 (that is, configures a value of K as 2), or the network device configures a quantity of first weight vectors that need to be fed back as 2 (that is, a quantity of digital ports included in each group of the K groups of digital ports is 4). In this case, one first weight vector may be fed back for digital ports 0 to 3, and one first weight vector may be fed back for digital ports 4 to 7. Usually, if two digital ports correspond to different polarization of one panel, a same first weight vector is fed back, but the terminal device does not sense a polarization manner, and senses only the digital port.

Correspondingly, the terminal device feeds back a same first weight vector based on digital ports configured with a same virtual port splitting manner.

In an implementation example, in the example C, the terminal device separately feeds back a first weight vector of each digital port, and also feeds back a same first weight vector corresponding to a plurality of digital ports.

Optionally, the measurement information satisfies any one of the following:
when a quantity of ranks of the reference signal satisfies a first condition, the measurement information includes the M pieces of information;
when a quantity of ranks of the reference signal satisfies a second condition, the measurement information includes the K pieces of information;
when channel quality information CQI of the reference signal satisfies a third condition, the measurement information includes the M pieces of information; and
when a CQI of the reference signal satisfies a fourth condition, the measurement information includes the K pieces of information.

In an implementation example, when the network device configures different quantities of ranks, a same first weight vector or different first weight vectors are fed back for different digital ports in the terminal device. Because a quantity of ranks is related to a rank of a channel, when the quantity of ranks is large, it indicates that multipath of the channel is rich, and beam coverage in different directions may be performed. Therefore, different first weight vectors may be fed back for different digital ports. On the contrary, when the quantity of ranks is small, it indicates that there are a small quantity of channel paths, and a same first weight vector may be fed back for different digital ports. For example, the terminal device may feed back one first weight vector for different digital ports, so that overheads can be reduced.

In an implementation example, the network device configures or the protocol specifies that when the quantity of ranks for the terminal to feed back channel information, the terminal feeds back a same first weight vector for all digital ports, that is, the terminal needs to feed back only one first weight vector for different digital ports.

In an implementation example, the network device configures or the protocol specifies that when the quantity of ranks is configured as N, the terminal feeds back N first weight vectors. Optionally, the terminal device feeds back a digital port index corresponding to each of the N first weight vectors.

In an implementation example, the network device configures or the protocol specifies a rank threshold. When the rank is greater than the threshold, the terminal device independently feeds back the first weight vector for each digital port. When the rank is less than the threshold, the terminal device feeds back a same first weight vector for different digital ports, that is, the terminal needs to feed back only one first weight vector for different digital ports.

In an implementation example, the network device configures or the protocol specifies a CQI threshold. When a CQI of the channel information fed back is greater than the threshold, the first weight vector is fed back for each port. When a CQI of channel information fed back is less than the threshold, the terminal device feeds back a same first weight vector for different digital ports. The CQI mainly reflects channel quality. When the CQI is large, it indicates that the channel quality is good, and each digital port may be used to independently measure and determine the first weight vector. When the CQI is small, it indicates that the channel quality is poor, and a plurality of digital ports need to be used to jointly estimate the first weight vector. Therefore, one first weight vector is fed back for the plurality of digital ports.

In a possible implementation, the method further includes: The terminal device receives indication information indicating that the measurement information includes the M pieces of information and/or the K pieces of information. In this manner, the terminal device and the network device can determine information content carried in the measurement information.

Optionally, the indication information is carried in configuration information of the reference signal, other messages/information/signaling, or the like. This is not limited herein.

In a possible implementation, the measurement information is measurement information corresponding to a first carrier, the measurement information is used to determine a first weight vector of each of M digital ports corresponding to the first carrier, and the first carrier includes one or more carriers (optionally, when the first carrier includes a plurality of carriers, it may also be understood as that the measurement information is measurement information corresponding to the plurality of carriers (for example, a second carrier and a third carrier)).

Alternatively, the measurement information is measurement information corresponding to a first BWP, the measurement information is used to determine a first weight vector of each of M digital ports corresponding to the first BWP, and the first BWP includes one or more BWPs (optionally, when the first BWP includes a plurality of BWPs, it may also be understood as that the measurement information is measurement information corresponding to the plurality of BWPs (for example, a second BWP and a third BWP)).

Alternatively, the measurement information is measurement information corresponding to a first bandwidth, the measurement information is used to determine a first weight vector of each of M digital ports corresponding to the first bandwidth, and the first bandwidth includes one or more sub-bands (optionally, when the first bandwidth includes a plurality of sub-bands, it may also be understood as that the measurement information is measurement information corresponding to a plurality of bandwidths (for example, a second bandwidth and a third bandwidth)).

Specifically, the measurement information may be used to determine a first weight vector of each of M digital ports corresponding to one or more carriers (or one or more BWPs or one or more sub-bands), to improve flexibility of implementing the solution.

For example, the measurement information is the measurement information corresponding to the first carrier.

When the first carrier includes one carrier, the terminal device may measure channel information of the carrier based on the reference signal in step S301, and the measurement information of the terminal device in step S302 is used to determine weights of virtual ports in M digital ports corresponding to the carrier.

When the first carrier includes D (D is greater than 1) carriers, the terminal device may measure channel information of the D carriers based on the reference signal in step S301, and the measurement information of the terminal device in step S302 is used to determine weights of virtual ports in M digital ports corresponding to the D carriers.

For example, the measurement information may include weights (denoted as a weight 1) of virtual ports in M digital ports corresponding to one carrier, and weights of M virtual ports corresponding to different carriers are the same, that is, the network device may determine that the weights of the virtual ports in the M digital ports corresponding to the D carriers are all the weight 1.

For another example, the measurement information may include weights (denoted as a weight 1, ..., and a weight D) of virtual ports in M digital ports corresponding to D carriers, and the network device may respectively determine, based on the weight 1, ..., and the weight D, the weights of the virtual ports in the M digital ports corresponding to the D carriers.

Similarly, when the measurement information is the measurement information corresponding to the first bandwidth (or the measurement information is the measurement information corresponding to the first bandwidth), refer to the foregoing implementation example in which the measurement information is the measurement information corresponding to the first carrier.

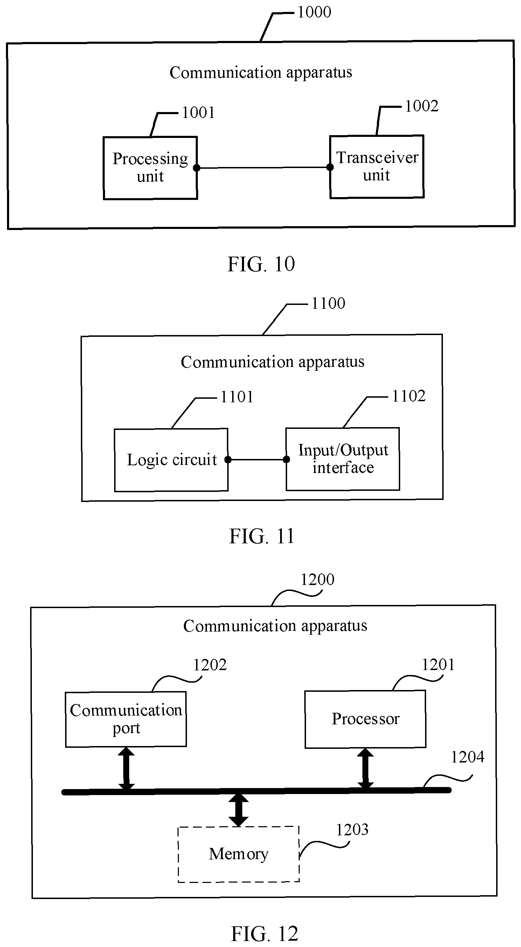

Refer to FIG. 10. An embodiment of this application provides a communication apparatus 1000. The communication apparatus 1000 can implement a function of the terminal device (or the network device) in the foregoing method embodiments, and therefore can also the achieve beneficial effects of the foregoing method embodiments. In this embodiment of this application, the communication apparatus 1000 may be the terminal device (or the network device), or may be an integrated circuit, an element, or the like inside the terminal device (or the network device), for example, a chip. In the following embodiments, an example in which the communication apparatus 1000 is the terminal device or the network device is used for description.

In a possible implementation, when the apparatus 1000 is configured to perform the method performed by the terminal device in the foregoing embodiments, the apparatus 1000 includes a processing unit 1001 and a transceiver unit 1002. The transceiver unit 1002 is configured to receive a reference signal, where the reference signal is sent through M digital ports, M is a positive integer, a first digital port in the M digital ports includes N₁ virtual ports, and N₁ is an integer greater than or equal to 1. The processing unit 1001 is configured to determine measurement information. The transceiver unit 1002 is further configured to send the measurement information, where the measurement information includes first information obtained by performing measurement based on a reference signal sent through the first digital port, the first information is determined based on N₁ pieces of channel information, the N₁ pieces of channel information are determined respectively by using reference signals sent through the N₁ virtual ports, and the first information is used to determine weights of the N₁ virtual ports in the first digital port.

In a possible implementation, when the apparatus 1000 is configured to perform the method performed by the network device in the foregoing embodiments, the apparatus 1000 includes a processing unit 1001 and a transceiver unit 1002. The processing unit 1001 is configured to determine a reference signal. The transceiver unit 1002 is configured to send the reference signal, where the reference signal is sent through M digital ports, M is a positive integer, a first digital port in the M digital ports includes N₁ virtual ports, and N₁ is an integer greater than or equal to 1. The transceiver unit 1002 is further configured to receive measurement information, where the measurement information includes first information obtained by performing measurement based on a reference signal sent through the first digital port, the first information is determined based on N₁ pieces of channel information, and the N₁ pieces of channel information are determined respectively by using reference signals sent through the N₁ virtual ports.

It should be noted that for details of content such as an information execution process of the unit of the communication apparatus 1000, refer to the descriptions in the foregoing method embodiments of this application. Details are not described herein again.

FIG. 11 is a diagram of another structure of a communication apparatus 1100 according to this application. The communication apparatus 1100 includes a logic circuit 1101 and an input/output interface 1102. The communication apparatus 1100 may be a chip or an integrated circuit.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, the input/output interface 1102 is configured to receive a reference signal, where the reference signal is sent through M digital ports, M is a positive integer, a first digital port in the M digital ports includes N₁ virtual ports, and N₁ is an integer greater than or equal to 1. The logic circuit 1101 is configured to determine measurement information. The input/output interface 1102 is further configured to send the measurement information, where the measurement information includes first information obtained by performing measurement based on a reference signal sent through the first digital port, the first information is determined based on N₁ pieces of channel information, the N₁ pieces of channel information are determined respectively by using reference signals sent through the N₁ virtual ports, and the first information is used to determine weights of the N₁ virtual ports in the first digital port. The logic circuit 1101 and the input/output interface 1102 may further perform another steps performed by the terminal device in the foregoing embodiments, and achieve corresponding beneficial effects. Details are not described herein again.

Optionally, the logic circuit 1101 is configured to determine a reference signal. The input/output interface 1102 is configured to send the reference signal, where the reference signal is sent through M digital ports, M is a positive integer, a first digital port in the M digital ports includes N₁ virtual ports, and N₁ is an integer greater than or equal to 1. The input/output interface 1102 is further configured to receive measurement information, where the measurement information includes first information obtained by performing measurement based on a reference signal sent through the first digital port, the first information is determined based on N₁ pieces of channel information, and the N₁ pieces of channel information are determined respectively by using reference signals sent through the N₁ virtual ports. The logic circuit 1101 and the input/output interface 1102 may further perform another steps performed by the network device in the foregoing embodiments, and achieve corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus. A part or all of functions of the processing apparatus may be implemented by using software. The part or all of the functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may only include the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processor units (central processor unit, CPU), network processors (network processor, NP), digital signal processing circuits (digital signal processor, DSP), micro controller units (micro controller unit, MCU), programmable controllers (programmable logic device, PLD), another integrated chip, any combination of the foregoing chips or processors, or the like.

FIG. 12 shows a communication apparatus 1200 in the foregoing embodiments according to an embodiment of this application. The communication apparatus 1200 may be specifically a communication apparatus serving as a terminal device in the foregoing embodiments. An example shown in FIG. 12 is that the terminal device is implemented as the terminal device (or a component in the terminal device).

In a possible diagram of a logical structure of the communication apparatus 1200, the communication apparatus 1200 may include but is not limited to at least one processor 1201 and a communication port 1202.

Further optionally, the apparatus may include at least one of a memory 1203 and a bus 1204. In this embodiment of this application, the at least one processor 1201 is configured to control an action of the communication apparatus 1200.

In addition, the processor 1201 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1200 shown in FIG. 12 may be specifically configured to implement steps implemented by the terminal device in the foregoing method embodiments, and implement technical effects corresponding to the terminal device. For a specific implementation of the communication apparatus shown in FIG. 12, refer to the descriptions in the foregoing method embodiments. Details are not described herein again.

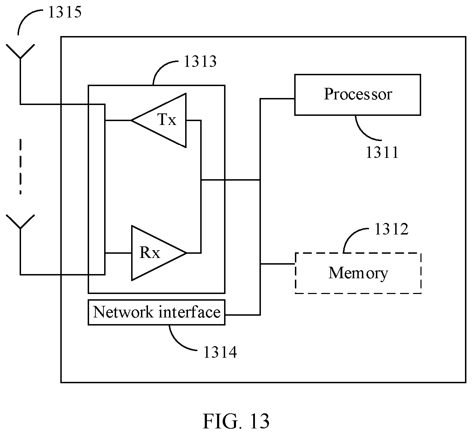

FIG. 13 is a diagram of a structure of a communication apparatus 1300 in the foregoing embodiment according to an embodiment of this application. The communication apparatus 1300 may be specifically the communication apparatus serving as the network device in the foregoing embodiment. In the example shown in FIG. 13, the network device is implemented as a network device (or a component in a network device). For a structure of the communication apparatus, refer to the structure shown in FIG. 13.

The communication apparatus 1300 includes at least one processor 1311 and at least one network interface 1314. Further optionally, the communication apparatus includes at least one memory 1312, at least one transceiver 1313, and one or more antennas 1315. The processor 1311, the memory 1312, the transceiver 1313, and the network interface 1314 are connected, for example, through a bus. In this embodiment of this application, the connection may include various interfaces, transmission lines, buses, or the like. This is not limited in this embodiment. The antenna 1315 is connected to the transceiver 1313. The network interface 1314 is configured to enable the communication apparatus to communicate with another communication device through a communication link. For example, the network interface 1314 may include a network interface between the communication apparatus and a core network device, for example, an S1 interface. The network interface may include a network interface between the communication apparatus and another communication apparatus (for example, another network device or core network device), for example, an X2 or Xn interface.

The processor 1311 is mainly configured to process a communication protocol and communication data; control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1311 in FIG. 13. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance a processing capability, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1312 may exist independently, and is connected to the processor 1311. Optionally, the memory 1312 may be integrated with the processor 1311, for example, integrated into one chip. The memory 1312 can store program code for executing the technical solution in embodiments of this application, and the processor 1311 controls execution of the program code. Various types of executed computer program code may also be considered as drivers of the processor 1311.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1313 may be configured to support receiving or sending of a radio frequency signal between the communication apparatus and a terminal, and the transceiver 1313 may be connected to the antenna 1315. The transceiver 1313 includes a transmitter Tx and a receiver Rx. Specifically, the one or more antennas 1315 may receive radio frequency signals. The receiver Rx of the transceiver 1313 is configured to receive the radio frequency signal from the antenna, convert the radio frequency signal into a digital baseband signal or a digital intermediate frequency signal, and provide the digital baseband signal or the digital intermediate frequency signal to the processor 1311, so that the processor 1311 performs further processing, for example, demodulation processing and decoding processing, on the digital baseband signal or the digital intermediate frequency signal. In addition, the transmitter Tx of the transceiver 1313 is further configured to receive a modulated digital baseband signal or a modulated digital intermediate frequency signal from the processor 1311, convert the modulated digital baseband signal or the modulated digital intermediate frequency signal into a radio frequency signal, and send the radio frequency signal through the one or more antennas 1315. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion is adjustable. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion is adjustable. The digital baseband signal and the digital intermediate frequency signal may be collectively referred to as a digital signal.

The transceiver 1313 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiver circuit, or the like. The sending unit may be referred to as a transmitter machine, a transmitter, a transmitter circuit, or the like.

It should be noted that, the communication apparatus 1300 shown in FIG. 13 may be specifically configured to implement steps implemented by the network device in the foregoing method embodiments, and implement technical effects corresponding to the network device. For a specific implementation of the communication apparatus 1300 shown in FIG. 13, refer to the descriptions in the foregoing method embodiments. Details are not described herein again.

An embodiment of this application further provides a computer-readable storage medium, configured to store one or more computer-executable instructions. When the computer-executable instructions are executed by a processor, the processor performs the method in the possible implementations of the communication apparatus (for example, the terminal device or the network device) in the foregoing embodiments.

An embodiment of this application further provides a computer program product (also referred to as a computer program). When the computer program product is executed by a processor, the processor performs the method in the possible implementations of the communication apparatus (for example, the terminal device or the network device).

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. An architecture of the network system includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making contribution, or all or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving a reference signal, wherein the reference signal is sent in L₁ time units by using L₁ first weights respectively, L₁ is an integer greater than 1, an i^{th} first weight in the L₁ first weights is obtained by using an i^{th} second weight in L₁ second weights and a third weight, the L₁ second weights are orthogonal, and a value of i ranges from 1 to L₁; and
sending measurement information, wherein the measurement information is obtained by performing measurement based on the reference signal.

2. A communication method, comprising:
sending a reference signal, wherein the reference signal is sent in L₁ time units by using L₁ first weights respectively, L₁ is an integer greater than 1, an i^{th} first weight in the L₁ first weights is obtained by using an i^{th} second weight in L₁ second weights and a third weight, the L₁ first weights are orthogonal, and a value of i ranges from 1 to L₁; and
receiving measurement information, wherein the measurement information is obtained based on the reference signal.

3. The method according to claim 1 or 2, wherein the reference signal is sent through M digital ports, and M is a positive integer; and
weights corresponding to a first digital port in the M digital ports in the L₁ time units are the L₁ first weights, the first digital port comprises N₁ virtual ports, the second weight comprises N₁ elements corresponding to the N₁ virtual ports, and N₁ is an integer greater than or equal to 1.

4. The method according to claim 3, wherein the N₁ virtual ports correspond to N₁ antenna element sets respectively, each antenna element set comprises one or more antenna elements, and the N₁ elements are used to adjust phases of the N₁ antenna element sets respectively.

5. The method according to claim 4, wherein the third weight comprises N₁ sub-vectors, a dimension of a P^{th} sub-vector in the N₁ sub-vectors is the same as a quantity of antenna elements in a P^{th} antenna element set in the N₁ antenna element sets, and a value of P ranges from 1 to N₁.

6. The method according to any one of claims 3 to 5, wherein the measurement information comprises first information obtained by performing measurement based on a reference signal sent through the first digital port, the first information is determined based on N₁ pieces of channel information, the N₁ pieces of channel information are determined respectively by using reference signals sent through the N₁ virtual ports, and the first information is used to determine weights of the N₁ virtual ports in the first digital port.

7. The method according to any one of claims 1 to 6, wherein a dimension of the first weight is the same as a dimension of the third weight.

8. The method according to any one of claims 1 to 7, wherein that the i^{th} first weight in the L₁ first weights is obtained by using the i^{th} second weight in the L₁ second weights and the third weight comprises:
the i^{th} first weight in the L₁ first weights is obtained by multiplying N₁ elements in the i^{th} second weight in the L₁ second weights by the N₁ sub-vectors in the third weight respectively.

9. The method according to any one of claims 3 to 8, wherein a value of M is 1.

10. The method according to any one of claims 3 to 8, wherein a value of M is greater than 1.

11. The method according to claim 10, wherein a resource of the reference signal satisfies one of the following:
in the resource of the reference signal, time domain resources and frequency domain resources used by different digital ports in the M digital ports to send the reference signal are the same, and the different digital ports in the M digital ports are code division multiplexed;
in the resource of the reference signal, time domain resources used by different digital ports in the M digital ports to send the reference signal are the same, and frequency domain resources used by the different digital ports in the M digital ports to send the reference signal are different; and
in the resource of the reference signal, the M digital ports belong to Q groups of digital ports, each group of digital ports comprises one or more digital ports, Q is a positive integer, frequency domain resources used by different groups of digital ports in the Q groups of digital ports to send the reference signal are different, frequency domain resources used by one or more digital ports comprised in a same group of digital ports in the Q groups of digital ports to send the reference signal are the same, and the one or more digital ports comprised in the same group of digital ports are code division multiplexed.

12. The method according to claim 10 or 11, wherein a second digital port in the M digital ports comprises N₁ virtual ports; and
the reference signal is sent in L₂ time units by using L₂ fourth weights respectively, L₂ is an integer greater than 1, a j^{th} fourth weight in the L₂ fourth weights is obtained by using a j^{th} fifth weight in L₂ fifth weights and a sixth weight, and the L₂ fifth weights are orthogonal.

13. The method according to any one of claims 10 to 12, wherein
when in the resource of the reference signal, time domain resources and frequency domain resources used by different digital ports in the M digital ports to send the reference signal are the same, and the different digital ports are code division multiplexed, resources used by the different digital ports in the M digital ports to send the reference signal comprise same M frequency domain units in frequency domain; or
when in the resource of the reference signal, time domain resources used by different digital ports in the M digital ports to send the reference signal are the same, frequency domain resources used by the different digital ports in the M digital ports to send the reference signal are different, and the different digital ports in the M digital ports are not code division multiplexed, resources used by the different digital ports in the M digital ports to send the reference signal comprise M different frequency domain units in frequency domain.

14. The method according to any one of claims 3 to 13, wherein the measurement information satisfies at least one of the following:
the measurement information is measurement information corresponding to a first carrier, the measurement information is used to determine a first weight vector of each of M digital ports corresponding to the first carrier, and the first carrier comprises one or more carriers;
the measurement information is measurement information corresponding to a first bandwidth part BWP, the measurement information is used to determine a first weight vector of each of M digital ports corresponding to the first BWP, and the first BWP comprises one or more BWPs; and
the measurement information is measurement information corresponding to a first bandwidth, the measurement information is used to determine a first weight vector of each of M digital ports corresponding to the first bandwidth, and the first bandwidth comprises one or more sub-bands.

15. A communication apparatus, comprising a module configured to perform the method according to any one of claims 1 to 14.

16. A communication apparatus, comprising at least one processor, wherein the at least one processor is coupled to a memory, and the at least one processor is configured to perform the method according to any one of claims 1 to 14.

17. The communication apparatus according to claim 16, wherein the communication apparatus is a chip or a chip system.

18. A readable storage medium, wherein the storage medium stores a computer program or instructions, and when the computer program or the instructions are executed by a communication apparatus, the method according to any one of claims 1 to 14 is implemented.
